# EUROPEAN PATENT APPLICATION

(11) **EP 4 790 914 A1**
(43) Date of publication of application: **12.08.2026**
(21) Application number: 24884863.2
(22) Date of filing: 30.10.2024
(51) Int. Cl.: H04B 7/06, H04W 72/04, H04W 16/28

(54) **COMMUNICATION METHOD AND APPARATUS**

(30) Priority: 31.10.2023 CN 202311440499
(71) Applicant: HUAWEI TECHNOLOGIES CO., LTD., Shenzhen 518129 (CN)
(72) Inventor: DONG, Changzhao, Shenzhen, Guangdong 518129 (CN); ZHANG, Leiming, Shenzhen, Guangdong 518129 (CN); YANG, Yubo, Shenzhen, Guangdong 518129 (CN); GAO, Xiang, Shenzhen, Guangdong 518129 (CN); LIU, Kunpeng, Shenzhen, Guangdong 518129 (CN)
(74) Representative: MERH-IP Matias Erny Reichl Hoffmann Patentanwälte PartG mbB
(86) International application number: PCT/CN2024/128683
(87) International publication number: WO 2025/092863

(57) **Abstract**

A communication method and apparatus are provided, relating to the communication field, so that beam switching can be performed in a timely manner. The method includes: sending first indication information, and receiving second indication information. The first indication information is used for requesting measurement, switching, or restoration of a spatial parameter of a first channel or a spatial parameter of a first signal. The first channel is a physical channel between a terminal device and a network device, and the first signal is a reference signal transmitted between the terminal device and the network device. The second indication information indicates a first spatial parameter, and the first spatial parameter is used for transmitting the first channel or the first signal; or the second indication information indicates a first reference signal resource set, and at least one reference signal resource included in the first reference signal resource set each corresponds to one spatial parameter.

## Description

This application claims priority to Chinese Patent Application No. 202311440499.3, filed with the China National Intellectual Property Administration on October 31, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

With development of intelligent terminals, especially emergence of video services, user demand for capacities explosively increase. Therefore, high-frequency bands with a larger available bandwidth become candidate frequency bands in next-generation communication systems. In addition, a beamforming-based signal transmission mechanism is used for signals in high-frequency bands, to mitigate high transmission loss caused by the high-frequency bands.

Because terminals at different locations require different beams during signal transmission, a base station needs to perform beam switching for the terminals at different locations. In new radio (new radio, NR), a beam switching procedure is as follows: A base station measures all beams, and determines, based on measurement results, a beam that best matches a terminal at a current location, and then switches to that beam.

However, current beam measurement is triggered periodically. Therefore, the base station cannot perform beam switching in a timely manner.

### SUMMARY

Embodiments of this application provide a communication method and apparatus, so that beam switching can be performed in a timely manner.

According to a first aspect, a communication method is provided. The method may be performed by a terminal device; may be performed by a component of the terminal device, for example, a processor, a chip, or a chip system of the terminal device; or may be implemented by a logical module or software that can implement all or some functions of the terminal device. The method includes: sending first indication information, where the first indication information is used for requesting to measure a spatial parameter of a first channel or a spatial parameter of a first signal, the first channel is a physical channel between a terminal device and a network device, and the first signal is a reference signal transmitted between the terminal device and the network device; or the first indication information is used for requesting to switch the spatial parameter of the first channel or the spatial parameter of the first signal; or the first indication information is used for requesting to restore the spatial parameter of the first channel or the spatial parameter of the first signal; and receiving second indication information, where the second indication information indicates a first spatial parameter, and the first spatial parameter is used for transmitting the first channel or the first signal; or the second indication information indicates a first reference signal resource set, and at least one reference signal resource included in the first reference signal resource set each corresponds to one spatial parameter.

According to the solution, the terminal device sends the first indication information to trigger measurement, switching, or restoration of the spatial parameter of the first channel or the spatial parameter of the first signal (that is, a beam of the first channel/a beam of the first signal). In comparison with the network device, the terminal device can learn of a change of a beam of the terminal device in a timely manner (for example, beam mismatch for the first channel/the first signal due to movement of the terminal device). Therefore, the terminal device may send the first indication information when the beam changes, to indicate the network device to measure, switch, or restore the spatial parameter of the first channel or the spatial parameter of the first signal, so that the network device can indicate a new beam (that is, perform beam switching) to the terminal device in a timely manner, to ensure signal or channel transmission and maintain normal communication between the network device and the terminal device.

In a possible design, sending the first indication information includes: determining that a first condition is satisfied, where the first condition includes one or more of the following: a first channel hybrid automatic repeat request HARQ feedback of the terminal device is a negative NACK, and signal quality of the first signal is less than or equal to a first threshold; and sending the first indication information.

In a possible design, sending the first indication information includes: sending the first indication information if there is an uplink scheduling request SR.

In a possible design, the communication method further includes: sending at least one of a physical uplink shared channel PUSCH, a physical uplink control channel PUCCH, or an uplink reference signal, where the at least one of the PUSCH, the PUCCH, or the uplink reference signal is related to the first spatial parameter.

In a possible design, the communication method further includes: receiving at least one of a physical downlink shared channel PDSCH, a physical downlink control channel PDCCH, or a downlink reference signal, where the at least one of the PDSCH, the PDCCH, or the downlink reference signal is related to the first spatial parameter.

According to a second aspect, a communication method is provided. The method may be performed by a network device, or may be performed by a component of the network device, for example, a processor, a chip, or a chip system of the network device; or may be implemented by a logical module or software that can implement all or some functions of the network device. The method includes: receiving first indication information, where the first indication information is used for requesting to measure a spatial parameter of a first channel or a spatial parameter of a first signal, the first channel is a physical channel between a terminal device and a network device, and the first signal is a reference signal transmitted between the terminal device and the network device; or the first indication information is used for requesting to switch the spatial parameter of the first channel or the spatial parameter of the first signal; or the first indication information is used for requesting to restore the spatial parameter of the first channel or the spatial parameter of the first signal; and sending second indication information based on the first indication information, where the second indication information indicates a first reference signal resource set, and at least one reference signal resource included in the first reference signal resource set each corresponds to one spatial parameter.

According to the solution, the network device triggers, based on the first indication information indicated by the terminal device, measurement, switching, or restoration of the spatial parameter of the first channel or the spatial parameter of the first signal (that is, a beam of the first channel/a beam of the first signal). In comparison with the network device, the terminal device can learn of a change of a beam of the terminal device in a timely manner (for example, beam mismatch for the first channel/the first signal due to movement of the terminal device). Therefore, the terminal device may send the first indication information when the beam changes, to indicate the network device to measure, switch, or restore the spatial parameter of the first channel or the spatial parameter of the first signal, so that the network device can indicate a new beam (that is, perform beam switching) to the terminal device in a timely manner, to ensure signal or channel transmission and maintain normal communication between the network device and the terminal device.

In a possible design, the communication method further includes: receiving at least one of the following: a PUSCH, a PUCCH, or an uplink reference signal, where the at least one of the PUSCH, the PUCCH, or the uplink reference signal is related to the first spatial parameter.

In a possible design, the communication method further includes: sending at least one of the following: a PDSCH, a PDCCH, or a downlink reference signal, where the at least one of the PDSCH, the PDCCH, or the downlink reference signal is related to the first spatial parameter.

With reference to the first aspect and the second aspect, in a possible design, the first spatial parameter is used for transmission of a PDSCH corresponding to the NACK.

According to the possible design, because the first channel HARQ feedback of the terminal device is the NACK, and the signal quality of the first signal is less than or equal to the first threshold, it indicates that the channel quality of the first channel or the signal quality of the first signal is poor, and a new beam (that is, a spatial parameter) needs to be switched to. In this case, the terminal device may send the first indication information to the network device, to trigger measurement, switching, or restoration of the spatial parameter of the first channel or the spatial parameter of the first signal (that is, the beam of the first channel/the beam of the first signal), that is, the network device can start beam measurement or beam switching. In comparison with a solution in which a network device periodically performs beam measurement, in this design, beam switching can be performed in a timely manner, to ensure normal communication between the network device and the terminal device.

With reference to the first aspect and the second aspect, in a possible design, the first spatial parameter is used for transmission of a physical uplink shared channel PUSCH corresponding to the SR.

According to the possible design, if there is the SR, the terminal device sends the first indication information to the network device, to trigger measurement or switching of the spatial parameter of the first channel or the spatial parameter of the first signal (that is, the beam of the first channel/the beam of the first signal), so that the network device can configure a preferred spatial parameter (that is, a beam) for the terminal device in a timely manner, and the terminal device can send the PUSCH by using the preferred spatial parameter, to ensure normal communication between the network device and the terminal device.

With reference to the first aspect and the second aspect, in a possible design, the first indication information is located in a first field in first uplink control information UCI, where the first field is used for requesting to measure the spatial parameter of the first channel or the spatial parameter of the first signal; or the first field is used for requesting to switch the spatial parameter of the first channel or the spatial parameter of the first signal; or the first field is used for requesting to restore the spatial parameter of the first channel or the spatial parameter of the first signal.

With reference to the first aspect and the second aspect, in a possible design, the first indication information further indicates a first spatial parameter group, and the first spatial parameter group includes the first spatial parameter.

With reference to the first aspect and the second aspect, in a possible design, the first indication information indicates a second reference signal resource set, and at least one reference signal resource included in the second reference signal resource set each corresponds to one spatial parameter.

With reference to the first aspect and the second aspect, in a possible design, the first spatial parameter group is related to a second spatial parameter, and the second spatial parameter is the spatial parameter of the first channel, or the second spatial parameter is the spatial parameter of the first signal, and signal quality of the first signal is less than or equal to a spatial parameter of a first threshold.

With reference to the first aspect and the second aspect, in a possible design, the first spatial parameter group is determined based on the second spatial parameter.

With reference to the first aspect and the second aspect, in a possible design, a correlation between any spatial parameter in the first spatial parameter group and the second spatial parameter is greater than or equal to a second threshold.

According to the possible design, because a change of a beam (that is, the spatial parameter of the first channel or the spatial parameter of the first signal) is continuous, when the beam changes, for the first channel or the first signal, a beam with a strong correlation to the beam before the change has good performance. Therefore, the terminal device may determine the beam with the strong correlation to the beam before the change as the first spatial parameter group, and report the first spatial parameter group to the network device, so that the network device can determine the first spatial parameter or the first reference signal resource set based on the first spatial parameter group. In comparison with a solution in which a network device determines a first spatial parameter or a first reference signal resource set from all spatial parameters of a first channel or a first signal, in this design, resource consumption can be reduced, and a delay and complexity of determining the first spatial parameter or the first reference signal resource set can be reduced.

With reference to the first aspect and the second aspect, in a possible design, a difference between an index of any spatial parameter in the first spatial parameter group and an index of the second spatial parameter is less than or equal to a third threshold.

According to the possible design, because a change of a beam (that is, the spatial parameter of the first channel or the spatial parameter of the first signal) is continuous, when the beam changes, for the first channel or the first signal, a beam near the beam before the change has good performance (that is, a spatial parameter having an index whose difference from the index of the second spatial parameter is less than or equal to the third threshold). Therefore, the terminal device may determine the beam near the beam before the change as the first spatial parameter group, and report the first spatial parameter group to the network device, so that the network device can determine the first spatial parameter or the first reference signal resource set based on the first spatial parameter group. In comparison with a solution in which a network device determines a first spatial parameter or a first reference signal resource set from all spatial parameters of a first channel or a first signal, in this design, resource consumption can be reduced, and a delay and complexity of determining the first spatial parameter or the first reference signal resource set can be reduced.

With reference to the first aspect and the second aspect, in a possible design, the first indication information corresponds to a first index, and the first index is the same as an index of a control resource set pool CORESET pool corresponding to the second indication information.

With reference to the first aspect and the second aspect, in a possible design, the first indication information corresponds to a first index, and the first index is the same as an index of a control resource set pool CORESET pool corresponding to the second spatial parameter.

According to the foregoing two possible designs, the CORESET pool is configured by the network device for the terminal device, and different network devices configure different CORESET pools. In other words, the network device that configures the CORESET pool can be determined based on the index of the CORESET pool. Therefore, it may also be considered that the first index indicates the network device that configures the CORESET pool. Therefore, in a multi-TRP transmission mode, after the terminal device sends the first indication information to a plurality of network devices, the plurality of network devices may learn of, by using the first index, the network device responding to the first indication information.

According to a third aspect, a communication apparatus is provided, to implement various methods. The communication apparatus may be the terminal device in the first aspect or the network device in the second aspect, or an apparatus included in the terminal device or the network device, for example, a chip or a chip system. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function according to any one of the foregoing aspects and the possible implementations of the foregoing aspects. The transceiver module may include a receiving module and a sending module that are respectively configured to implement a receiving function and a sending function according to any one of the foregoing aspects or the possible implementations of the foregoing aspects.

In some possible designs, the transceiver module may include a transceiver circuit, a transceiver machine, a transceiver, or a communication interface.

According to a fourth aspect, a communication apparatus is provided, including a processor and a memory. The memory is configured to store computer instructions, and when the processor executes the instructions, the communication apparatus is caused to perform the method according to any one of the foregoing aspects. The communication apparatus may be the terminal device in the first aspect or the network device in the second aspect, or an apparatus included in the terminal device or the network device, for example, a chip or a chip system.

According to a fifth aspect, a communication apparatus is provided, including a processor and a communication interface. The communication interface is configured to communicate with a module outside the communication apparatus, and the processor is configured to execute a computer program or instructions, to enable the communication apparatus to perform the method according to any one of the foregoing aspects. The communication apparatus may be the terminal device in the first aspect or the network device in the second aspect, or an apparatus included in the terminal device or the network device, for example, a chip or a chip system.

According to a sixth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the terminal device in the first aspect or the network device in the second aspect, or an apparatus included in the terminal device or the network device, for example, a chip or a chip system.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that, when the communication apparatus according to any one of the third aspect to the sixth aspect is a chip, a sending action/function of the communication apparatus may be understood as outputting information, and a receiving action/function of the communication apparatus may be understood as inputting information.

According to a seventh aspect, a computer-readable storage medium is provided. The computer-readable storage medium stores a computer program or instructions. When the computer program or the instructions are run on a communication apparatus, the communication apparatus is caused to perform the method according to any one of the foregoing aspects.

According to an eighth aspect, a computer program product including instructions is provided. When the computer program product is run on a communication apparatus, the communication apparatus is caused to perform the method according to any one of the foregoing aspects.

For technical effects brought by any one of the designs of the third aspect to the eighth aspect, refer to technical effects brought by different designs of the first aspect or the second aspect. Details are not described herein again.

### BRIEF DESCRIPTION OF DRAWINGS

FIG. 1 is a diagram of a framework of a communication system to which an embodiment of this application is applied;
FIG. 2(a) and FIG. 2(b) are diagrams of frameworks of other communication systems to which an embodiment of this application is applied;
FIG. 3(a) and FIG. 3(b) are schematic flowcharts of beam indications according to an embodiment of this application;
FIG. 4 is a diagram of media access control control element MAC-CE signaling according to an embodiment of this application;
FIG. 5 is a schematic flowchart of another beam indication to which an embodiment of this application is applied;
FIG. 6 is a schematic flowchart of a communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of another communication apparatus according to an embodiment of this application.

### DESCRIPTION OF EMBODIMENTS

The technical solutions provided in this application may be applied to various communication systems. The communication system may be a 3rd generation partnership project (3rd generation partnership project, 3GPP) communication system, for example, a 4th generation (4th generation, 4G) long-term evolution (long-term evolution, LTE) system, an LTE-advanced (LTE-Advanced, LTE-A) system, or a 5th generation (5th generation, 5G) new radio (new radio, NR) system, a vehicle-to-everything (vehicle-to-everything, V2X) system, an LTE-NR hybrid networking system, a device-to-device (device-to-device, D2D) system, a machine-to-machine (machine-to-machine, M2M) communication system, an internet of things (internet of things, IoT), a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, another next-generation communication system, for example, a 6th generation (6th generation, 6G) communication system, and the like. Alternatively, the communication system may be a non-3GPP communication system. This is not limited.

The foregoing communication system applied to this application is merely an example for description, and is not limited thereto. Unified descriptions are provided herein and details are not described below again.

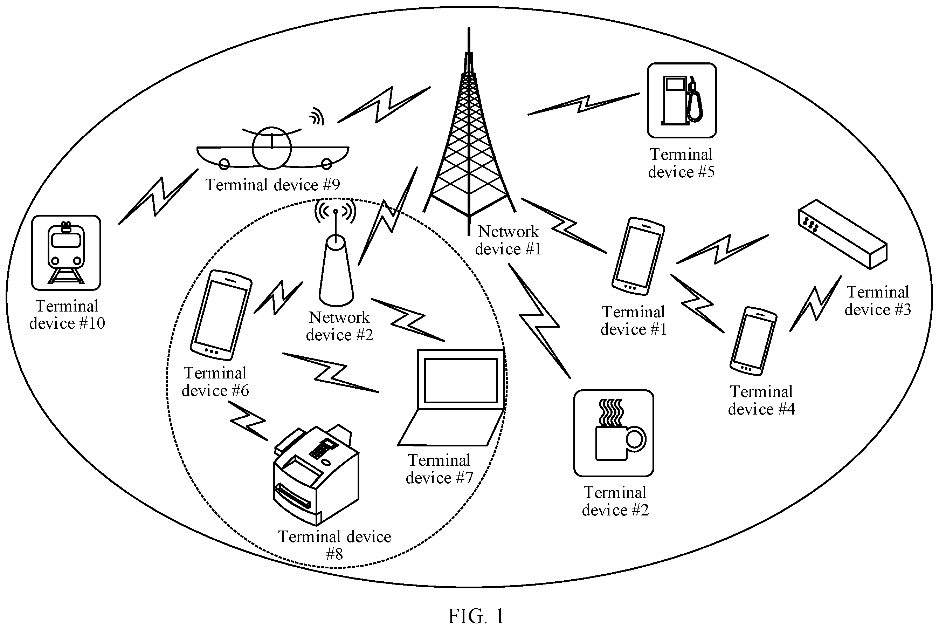

FIG. 1 shows an example of a communication system according to this application. The communication system includes at least one network device and at least one terminal device. Optionally, different terminal devices may communicate with each other.

Optionally, information transmission may be implemented between the network device and the terminal device via a transmission medium such as a radio wave, visible light, laser light, infrared light, an optical fiber, or the like.

Optionally, the network device in embodiments of this application is a device that enables the terminal device to access a wireless network. The network device may be a node in a radio access network, may be referred to as a base station, or may be referred to as a radio access network (radio access network, RAN) node (or device).

For example, the network device may include an evolved base station (NodeB or eNB or e-NodeB, evolved NodeB) in an LTE system or an LTE-A system, for example, a conventional macro base station eNB and a micro base station eNB in a heterogeneous network scenario. Alternatively, the network device may include a next generation NodeB (next generation NodeB, gNB) of wideband code division multiple access (wideband code division multiple access, WCDMA). Alternatively, the network device may include a transmission reception point (transmission reception point, TRP), a home base station (for example, a home evolved NodeB, or a home NodeB, HNB), a baseband unit (baseband unit, BBU), a baseband unit pool (BBU pool), a base transceiver station (base transceiver station, BTS) in a global system for mobile communication (global system for mobile communication, GSM) or code division multiple access (code division multiple access, CDMA) network, an access point (access point, AP) in wireless fidelity (wireless fidelity, Wi-Fi), or the like. Alternatively, the network device may include a base station in an NTN, that is, may be deployed on a high-altitude platform or a satellite. In the NTN, the network device may serve as a layer 1 (L1) relay (relay), a base station, a distributed unit (distributed unit, DU), or an integrated access and backhaul (integrated access and backhaul, IAB) node. Alternatively, the network device may be a device that implements a base station function in IoT, for example, a device that implements a base station function in V2X, D2D, or machine-to-machine (machine-to-machine, M2M) communication, or may include a vehicle-mounted device or a wearable device, or may include a network device in a 5G network or a public land mobile network (public land mobile network, PLMN) evolved after 5G. This is not limited in embodiments of this application.

In some possible scenarios, the network device in embodiments of this application may alternatively be a module or unit that can implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, the access network device may be a network device or a module in the network device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one unit of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (also referred to as a small cell), a relay station, an access point, a home base station, a TRP, a transmitting point (transmitting point, TP), a mobile switching center, and the like. This is not specifically limited in embodiments of this application.

Optionally, the terminal device in embodiments of this application may be a user-side device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future PLMN evolved after 5G. The access terminal may be a cellular phone (cellular phone), a cordless phone, a session initiation protocol (session initiation protocol, SIP) phone, a wireless local loop (wireless local loop, WLL) station, a smartphone (smartphone), a personal digital processing (personal digital assistant, PDA), a handheld device with a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation security (transportation safety), a wireless terminal in a smart city (smart city), a wireless terminal in a smart home (smart home), a wireless data card, a tablet computer, a wireless modem (modem), a handheld device (handset), a laptop computer (laptop computer), a machine type communication (machine type communication, MTC) terminal, or the like. Alternatively, the terminal may be a terminal that has a communication function in the IoT, for example, a terminal in V2X (for example, an internet of vehicles device), a terminal in D2D communication, a terminal in M2M communication, or the like. The terminal may be mobile or fixed.

Optionally, roles of the network device and the terminal device may be relative to each other. For example, for a terminal device #9 and a terminal device #10 in FIG. 1, the terminal device #10 needs to access a network device #1 via the terminal device #9. Therefore, for the terminal device #10, the terminal device #9 may be configured as a network device in this case; and for the network device #1, the terminal device #9 is a terminal device in this case. To be specific, the network device #1 and the terminal device #9 communicate with each other by using a wireless air interface protocol. Optionally, the network device #1 and the terminal device #9 may further communicate with each other by using an interface protocol between network devices. In this case, for the network device #1, the terminal device #9 is also used as a network device.

Optionally, communication may be performed between a network device and a terminal device, between network devices, or between terminal devices through a licensed spectrum, or an unlicensed spectrum, or both a licensed spectrum and an unlicensed spectrum. Optionally, communication may be performed between a network device and a terminal device, between network devices, or between terminal devices by using a spectrum below 6 gigahertz (gigahertz, GHz), or a spectrum above 6 GHz, or both a spectrum below 6 GHz and a spectrum above 6 GHz. A spectrum resource used for wireless communication is not limited in embodiments of this application.

The following describes the communication method provided in embodiments of this application with reference to the accompanying drawings. It can be understood that, in embodiments of this application, the network device or the terminal device may perform some or all of the steps in embodiments of this application. The steps or operations are merely examples. In embodiments of this application, other steps or variations of various steps may be further performed. In addition, the steps may be performed in a sequence different from a sequence presented in embodiments of this application, and not all operations in embodiments of this application need to be performed.

In an example, the communication system in this application may be applied to a single CC or carrier aggregation (carrier aggregation, CA) scenario.

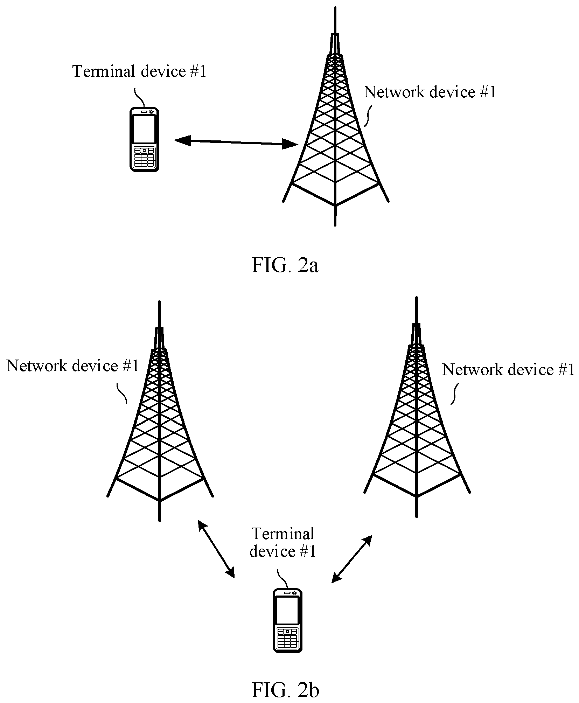

For example, in this example, the communication system in this application is shown in FIG. 2a. A network device #1 and a terminal device #1 in FIG. 2a communicate with each other via a wireless network. It should be understood that, the network device #1 provides services for one or more cells.

In another example, the communication system in this application may be applied to a dual connectivity (dual connectivity, DC) or coordinated multipoint transmission/reception (coordinated multipoint transmission/reception, CoMP) scenario.

For example, in this example, the communication system in this application is shown in FIG. 2b. In FIG. 2b, a network device #1 is a network device to which a terminal device #1 performs initial access, and is responsible for radio resource control (radio resource control, RRC) communication with the terminal device #1; and a network device #2 is added during RRC reconfiguration, and is configured to provide an extra radio resource.

The communication system to which this application is applied is merely an example for description, and the communication system to which this application is applied is not limited thereto. For example, other quantities of network devices and terminal devices may alternatively be included in the communication system, or a single base station scenario, a multi-carrier aggregation scenario, a dual connectivity scenario, or a D2D communication scenario may be used.

Optionally, the technical solutions in embodiments of this application may be applied to a beam indication in a single CC or CA scenario, or a beam indication in a DC scenario.

Optionally, the technical solutions in embodiments of this application may be applied to a case in which a primary cell (PCell) operates in a high frequency or a low frequency, and a secondary cell (SCell) operates in a high frequency or a low frequency. For example, when the PCell operates in a low frequency, the SCell operates in a high frequency. Usually, the low frequency and the high frequency are relative to each other, or may be differentiated based on a specific frequency, for example, 6 GHz.

It should be understood that, the technical solutions in embodiments of this application may be further applied to a beam indication in a coordinated multipoint transmission/reception (coordinated multipoint transmission/reception, CoMP) scenario. The CoMP scenario may be one or more of a non-coherent joint transmission (non-coherent joint transmission, NCJT) scenario, a coherent joint transmission (coherent joint transmission, CJT) scenario, a joint transmission (joint transmission, JT) scenario, or the like.

For ease of understanding of the technical solutions in embodiments of this application, the following first briefly describes technologies related to this application.

### 1. Control resource set (control resource set, CORESET)

The control resource set is a set of resources used for transmitting downlink control information, and may also be referred to as a control resource region or a physical downlink control channel resource set. A network device may configure one or more CORESETs for a terminal device, to send a physical downlink control channel (physical downlink control channel, PDCCH). The network device may send the PDCCH to the terminal device via any CORESET corresponding to the terminal device.

In addition, the network device may further configure, for the terminal device, other configuration information associated with the CORESET, for example, a search space set (search space set). The other configuration information associated with each CORESET is different in terms of, for example, a frequency domain width, a time domain length, or the like.

For example, the CORESET includes but is not limited to: a CORESET, a control region (control region), or an enhanced-physical downlink control channel (enhanced-physical downlink control channel, ePDCCH) set (set) defined in a 5G mobile communication system.

In embodiments of this application, a time-frequency resource occupied by the PDCCH may be referred to as a downlink control region. For example, the PDCCH is constantly located in first m symbols of a subframe, where a possible value of m is 1, 2, 3, or 4, and the first m symbols are the downlink control region.

Optionally, the downlink control region may be flexibly configured by using RRC signaling, a CORESET, and a search space set. Information including a frequency-domain resource of the PDCCH or a control channel element (control channel element, CCE), a quantity of continuous symbols in time domain, and the like may be configured in the CORESET. Information including a detection periodicity of the PDCCH and an offset and a start symbol in a slot may be configured in the search space set.

For example, if the search space set may be configured with the PDCCH periodicity of one slot and the start symbol in time domain of a symbol 0, the terminal device may detect the PDCCH at a start location of each slot.

### 2. Beam (beam)

The beam is a communication resource, and refers to distribution of signal strength formed by a radio signal in different directions in space. The beam may also be referred to as a spatial domain filter (spatial domain filter) or a spatial parameter (spatial parameter).

Optionally, a plurality of beams that have a same or similar communication feature may be considered as one beam. One beam corresponds to one or more antenna ports, and is used for transmitting a data channel, a control channel, a sounding signal, and the like. The one or more antenna ports corresponding to the beam may alternatively be considered as one antenna port set.

Different beams may be considered as different resources. For example, the beam may be a time-domain resource, a frequency-domain resource, a spatial-domain resource (that is, a spatial parameter), or the like. Different beams may be used for sending/receiving same information or different information.

Optionally, the beam may alternatively be a reference signal resource (for example, a beamforming-based reference signal resource) or beamforming information. Alternatively, the beam may represent information associated with a reference signal resource of a network device.

For example, the reference signal includes but is not limited to a channel state information reference signal (channel state information reference signal, CSI-RS), a synchronization signal/physical broadcast channel block (synchronization signal/physical broadcast channel block, SS/PBCH block) (for ease of description, the SS/PBCH block is briefly referred to as a synchronization signal block (synchronization signal block, SSB) below), a demodulation reference signal (demodulation reference signal, DMRS), a phase tracking reference signal (phase tracking reference signal, PTRS), and a tracking reference signal (tracking reference signal, TRS).

The information associated with the reference signal resource includes but is not limited to a reference signal resource identifier or quasi co-location (quasi co-location, QCL) information. The reference signal resource identifier corresponds to a transmit-receive beam pair established during measurement based on the reference signal resource prior to a current moment. The terminal device may deduce beam information based on an index of the reference signal resource.

### 3. Spatial parameter

The spatial parameter may also be referred to as a spatial characteristic. The spatial parameter may include QCL information, or the spatial parameter may include spatial relation (spatial relation) information. The QCL information indicates a spatial parameter of a downlink signal, and the spatial relation information indicates a spatial parameter of an uplink signal. In other words, the QCL information is used for assisting in describing a receive beam of a terminal device, and the spatial relation information is used for assisting in describing a transmit beam of the terminal device.

For example, the uplink signal includes but is not limited to a physical uplink control channel (physical uplink control channel, PUCCH), a PUSCH, a sounding reference signal (sounding reference signal, SRS), a PTRS, and a DMRS. The downlink signal includes but is not limited to a PDCCH, a PDSCH, a TRS, a CSI-RS, an SSB, a DMRS, a PTRS, and a TRS.

The spatial relation information indicates a relationship between spatial parameters of two reference signals. For example, the two reference signals are respectively a target reference signal and a reference signal. The target reference signal is usually an uplink signal. For example, the target reference signal includes but is not limited to a DMRS and an SRS. The source reference signal includes but is not limited to a CSI-RS, an SRS, and an SSB.

The QCL information may indicate a QCL relationship between two reference signals. For example, the two reference signals are respectively a target reference signal and a reference signal. The target reference signal is usually a downlink signal. For example, the target reference signal includes but is not limited to a DMRS and a CSI-RS. The source reference signal includes but is not limited to a CSI-RS, a TRS, and an SSB.

The QCL information of the PDCCH is used as an example. A network device may configure K pieces of candidate QCL information (for example, K transmission configuration indicator (transmission configuration indicator, TCI) states (TCI-state)) for the terminal device by using RRC; and further indicate the QCL information of the PDCCH from the K pieces of candidate QCL information by using a media access control (Media Access Control, MAC) control element (control element, CE) (MAC-CE). K is an integer greater than or equal to 1.

Signals corresponding to antenna ports that have a QCL relationship may have same or similar spatial characteristic parameters (also referred to as parameters), a spatial characteristic parameter (also referred to as a parameter) of one antenna port may be used for determining a spatial characteristic parameter (also referred to as a parameter) of another antenna port that has a QCL relationship with the antenna port, two antenna ports have same or similar spatial characteristic parameters (also referred to as parameters), or a difference between spatial characteristic parameters (also referred to as parameters) of two antenna ports is less than a threshold.

It should be understood that, spatial parameters of two reference signals (or two channels, or a reference signal and a signal) that have a QCL relationship/spatial relation (relation) are the same (or similar or approximately the same), so that a spatial parameter of a target reference signal may be deduced based on an index of a source reference signal resource.

For example, the spatial parameter includes but is not limited to: an angle of arrival (angle of arrival, AoA), a dominant (dominant) angle of arrival AoA, an average angle of arrival, a power angular spectrum (power angular spectrum, PAS) of an angle of arrival, an angle of departure (angle of departure, AoD), a dominant angle of departure, an average angle of departure, a power angular spectrum of an angle of departure, transmit beamforming of a terminal device, receive beamforming of a terminal device, a spatial channel correlation, transmit beamforming of a network device, receive beamforming of a network device, an average channel gain, an average delay (average delay) of a channel, a delay spread (delay spread), a Doppler spread (Doppler spread), a Doppler shift (Doppler shift), or a spatial reception parameter (spatial reception parameter).

The spatial parameter describes a characteristic of a spatial channel between antenna ports of a source reference signal and a target reference signal, to help the terminal device complete a receive-side beamforming or receiving processing process based on the QCL information, and/or help the terminal device complete a transmit-side beamforming or transmission processing process based on the spatial relation information. For example, the terminal device may receive the target reference signal based on receive beam information of the source reference signal indicated by the QCL information. Alternatively, the terminal device may transmit the target reference signal based on transmit beam information of the source reference signal indicated by the spatial relation information.

For example, the network device may indicate, to the terminal device, that a demodulation reference signal of the PDCCH or the PDSCH and one or more of a plurality of reference signal resources previously reported by the terminal device satisfy a QCL relationship (or it may be considered that there is a QCL relationship between a demodulation reference signal of the PDCCH or the PDSCH and one or more of a plurality of reference signal resources previously reported by the terminal device). For example, the reference signal may be a CSI-RS. An index of each reported CSI-RS resource corresponds to one transmit-receive beam pair that is previously established during measurement performed based on the CSI-RS resource. It should be understood that, the receive beam information of two reference signals or channels that satisfy the QCL relationship is the same, and the terminal device may infer, based on an index of the reference signal resource, the receive beam information for receiving the PDCCH or the PDSCH.

In an existing protocol, there may be the following four types of QCL relationships based on different parameters: type A (type A): Doppler shift, Doppler spread, average delay, and delay spread; type B (type B): Doppler shift and Doppler spread; type C (type C): Doppler shift and average delay; and type D (type D): spatial reception parameter (Spatial Rx parameter).

The network device may configure one or more types of QCL for the terminal device, for example, QCL types A+D, QCL types C+D, and the like.

When the QCL relationship is a QCL relationship of type D, the QCL relationship may be considered as spatial-domain QCL. When antenna ports satisfy the spatial-domain QCL relationship, the QCL relationship may be a QCL relationship (or referred to as the spatial relation described above) between ports for downlink signals, or a QCL relationship between ports for uplink signals. For example, a QCL relationship between ports for a downlink signal and an uplink signal, or a QCL relationship between ports for an uplink signal and a downlink signal may be that the two signals may have a same AOA or AOD, indicating that the two signals have a same receive beam or transmit beam. For another example, a QCL relationship between ports for a downlink signal and an uplink signal, or a QCL relationship between a port for an uplink signal and a port for a downlink signal may be that there is a correspondence between AOAs and AODs of the two signals, or that there is a correspondence between AODs and AOAs of the two signals. To be specific, beam reciprocity may be used for determining an uplink transmit beam based on a downlink receive beam or determine a downlink receive beam based on an uplink transmit beam.

At a transmit end, if two antenna ports have a spatial-domain QCL relationship, it may indicate that corresponding beam directions of the two antenna ports are consistent in space. At a receive end, if two antenna ports have a spatial-domain QCL relationship, it may indicate that the receive end can receive, in a same beam direction, signals sent via the two antenna ports.

Signals transmitted through ports that have a spatial-domain QCL relationship may further have corresponding beams. The corresponding beam may include one or more of the following: a same receive beam, a same transmit beam, a transmit beam corresponding to a receive beam (for example, which may correspond to a reciprocity scenario), and a receive beam corresponding to a transmit beam (for example, which may correspond to a reciprocity scenario).

Signals transmitted through ports that have a spatial-domain QCL relationship may alternatively be understood as signals received or sent by using a same spatial filter (spatial filter). The spatial filter may be one or more of the following: precoding, a weight of an antenna port, phase deflection of the antenna port, or an amplitude gain of the antenna port.

Signals transmitted through ports that have a spatial-domain QCL relationship may alternatively be understood as having a corresponding beam pair link (beam pair link, BPL). The corresponding BPL includes at least one or more of the following: a same downlink BPL, a same uplink BPL, an uplink BPL corresponding to a downlink BPL, or a downlink BPL corresponding to an uplink BPL.

Therefore, the spatial reception parameter (that is, the QCL of type D) may be understood as a parameter indicating direction information of a receive beam.

In an example of this application, a correspondence among some parameters may also be applied to scenarios with QCL descriptions.

It should be understood that, scenarios to which the QCL assumption applies in this application may involve two reference signals or an association relationship between transmission objects.

### 4. TCI-state

The TCI-state includes QCL information of a signal or a channel, or the TCI-state indicates QCL information of a signal or a channel, and is configured by a network device for a terminal device. For example, the channel includes but is not limited to a PDCCH, a CORESET, and a PDSCH. The signal includes but is not limited to a CSI-RS, a DMRS, and a TRS.

For example, the TCI-state may indicate that a reference signal/channel included in the TCI and a target reference signal/target channel satisfy a QCL relationship. In this way, the terminal device may infer a spatial parameter of the target reference signal/a spatial parameter of the target channel based on the TCI-state.

The TCI-state is configured by the network device for the terminal device. Specifically, a TCI-state field includes a TCI-state identifier (tci-StateId) field and two DCL-type (qcl-Type1 and qcl-Type1) fields. A DCL-type (for example, qcl-Type1 or qcl-Type1) field includes a cell (cell) field, a bandwidth part identifier (bwp-Id) field, and an associated signal (referenceSignal) field. The cell field indicates an index of a serving cell, and the referenceSignal field indicates two associated reference signals, for example, a CRI-RS signal and an SSB signal. For example, one or more source reference signals may be configured in one TCI-state. In other words, configuration information of one TCI-state may include identifiers of one or more source reference signal resources.

In addition, in TCI-states configured for different cells and different BWPs, if indexes of the TCI-states are the same, configurations of the corresponding TCI-states are also the same.

A unified (unified) TCI-state can indicate spatial parameters (that is, beams) of at least two types of channels/signals. In other words, a beam indicated by the unified TCI-state (for example, a beam corresponding to QCL information indicated by the unified TCI-state) may be used for transmission of the at least two types of channels/signals. In other words, the at least two types of channels/signals share the beam indicated by the unified TCI-state.

For example, a PDSCH is indicated by the unified TCI-state. A unified TCI-state pool may be configured for the terminal device by using RRC signaling, or RRC signaling indicates that a current TCI-state can indicate the spatial parameters of the at least two types of channels/signals. Therefore, after MCC-CE signaling indicates one or more unified TCI-states, one unified TCI-state indicated by DCI from the one or more unified TCI-states may be used for transmission of the at least two types of channels/signals.

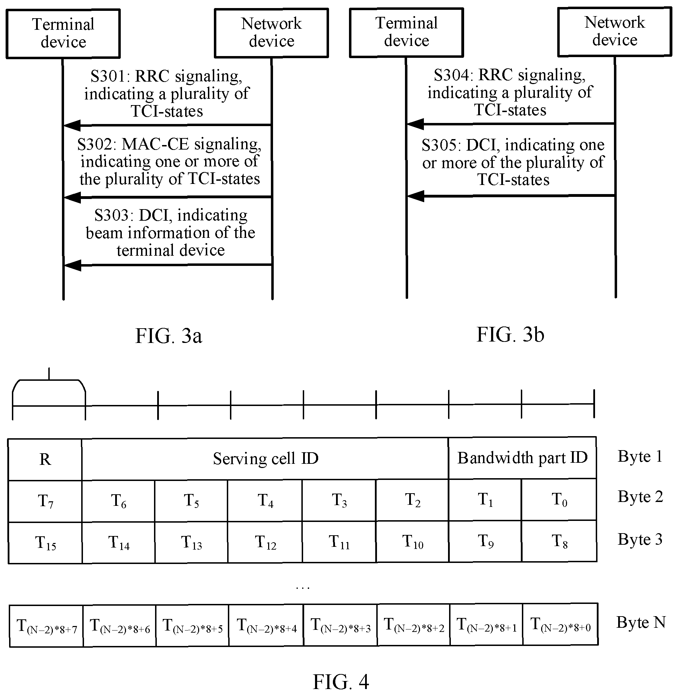

For example, an implementation of indicating the one or more unified TCI-states by using the MCC-CE signaling is similar to an implementation of the MCC-CE signaling in FIG. 3a. For details, refer to related descriptions of FIG. 3a. Details are not described herein again.

### 5. Reference signal

According to a function of a reference signal, there may be two types of the reference signal: one type of reference signal is used for channel estimation, and can implement coherent demodulation on a receive signal including control information or data; and one type of reference signal is used for channel state/channel quality measurement, and can implement scheduling of user equipment (user equipment, UE).

For example, the UE may obtain CSI based on measurement of channel quality of a CSI-RS, where the CSI may include one or more of a rank indicator (rank indicator, RI), a precoding indicator (precoding matrix indicator, PMI), and a channel quality indicator (channel quality indicator, CQI). Further, the UE may send the CSI to a base station, to implement channel estimation.

An aperiodic reference signal may indicate that a reference signal does not arrive at a receive end at a predetermined fixed interval. Alternatively, the aperiodic reference signal may indicate that a transmit end does not send a reference signal at a predetermined fixed interval. For example, a dynamically scheduled signal is usually an aperiodic signal. Alternatively, although the transmit end sets a to-be-sent reference signal as a periodically transmitted signal, the transmit end still cannot send the reference signal at the determined fixed interval due to various reasons. In this case, the reference signal is also considered as an aperiodically transmitted reference signal. For example, when a signal is transmitted on an unlicensed spectrum, because channel sounding fails, the signal is sent with a delay. In this case, the signal should be transmitted periodically, but is actually transmitted aperiodically. For another example, at a moment at which the transmit end sends the reference signal, a signal with a higher priority is being received. As a result, the transmit end cannot send the reference signal, and the reference signal may also be actually transmitted aperiodically.

For example, the aperiodic reference signal may include a CSI-RS, a DMRS, an SSB, and the like; or the reference signal may further include another aperiodic parameter signal other than the foregoing example. This is not limited in embodiments of this application.

### 6. Beam indication

Manner 1: Beam indication based on a single transmission reception point (transmission reception point, TRP).

For example, based on different types of channels or signals, beam indication information may include the following several possible implementations.

In a first possible implementation, the beam indication information is beam information of a PDSCH (for example, the beam indication information may be QCL information indicated by a TCI-state).

In an example, an indication of the beam information of the PDSCH may be implemented based on steps S301 to S303 shown in FIG. 3a.

S301: A network device sends RRC signaling to a terminal device, and correspondingly, the terminal device receives the RRC signaling from the network device. The RRC signaling indicates a plurality of TCI-states.

Optionally, the RCC signaling may indicate a plurality of TCI-states by indicating a TCI-state list. For example, the RRC signaling may indicate a plurality of TCI-states by using a tci-statesToAddModList field.

For example, the plurality of TCI-states indicated by the RCC signaling may include PDSCH TCI-states corresponding to all spatial parameters of the PDSCH.

S302: The network device sends MAC-CE signaling to the terminal device, and correspondingly, the terminal device receives the MAC-CE signaling from the network device. The MAC-CE signaling indicates one or more of the plurality of TCI-states.

Optionally, the network device may perform beam measurement (that is, beam sweeping) on spatial parameters respectively corresponding to the plurality of TCI-states, to determine the one or more TCI-states. In other words, before step S402, beam measurement (that is, beam sweeping) may be further performed, to determine the one or more TCI-states.

For example, that the MAC-CE signaling indicates the one or more of the plurality of TCI-states may also be understood as follows: The MAC-CE signaling activates the one or more of the one or more TCI-states, and separately maps the one or more TCI-states to a TCI field in downlink control information (downlink control information, DCI). It may be understood that, one TCI-state is used as an example. If the MAC-CE signaling activates the TCI-state, the TCI-state is mapped to the TCI field in the DCI; or if the MAC-CE signaling deactivates the TCI-state, the TCI-state is not mapped to the TCI field in the DCI.

Optionally, a quantity of TCI-states indicated by the MAC-CE signaling is less than or equal to 8. To be specific, the MAC-CE signaling can activate a maximum of 8 TCI-states of the plurality of TCI-states, and can map a maximum of 8 TCI-states to different code points of the TCI field of the DCI, respectively.

For example, the MAC-CE signaling indicates a maximum of 8 TCI-states. A mapping relationship between one or more TCI-states and a TCI field in DCI includes content shown in Table 1.

**Table 1**

| Code point of TCI field | TCI-state |
|---|---|
| 000 | TCI-state ID #1 |
| 001 | TCI-state ID #2 |
| 010 | TCI-state ID #3 |
| 011 | TCI-state ID #4 |
| 100 | TCI-state ID #5 |
| 101 | TCI-state ID #6 |
| 110 | TCI-state ID #7 |
| 111 | TCI-state ID #8 |

The TCI-state ID #1 to the TCI-state ID #8 in Table 1 respectively represent that the MAC-CE signaling indicates 8 TCI-states. Therefore, the DCI may indicate one of the 8 TCI-states by indicating a code point of the TCI field.

For example, as shown in FIG. 4, the MAC-CE signaling includes a serving cell (serving cell) identifier (identifier, ID) field, a BWP ID field, and a field corresponding to each TCI-state. The serving cell ID field indicates an ID of a serving cell to which one or more TCI-states belong. The BWP ID field indicates a downlink bandwidth region to which the one or more TCI-states are applied. A field corresponding to any one of the one or more TCI-states indicates whether the TCI-state is activated and whether the TCI-state is mapped to a TCI field in the DCI.

For example, if a value of the field corresponding to the TCI-state is 1, it may indicate that the TCI-state is activated and is mapped to the TCI field in the DCI. Correspondingly, if a value of the field corresponding to the TCI-state is 0, it may indicate that the TCI-state is deactivated and is not mapped to the TCI field in the DCI. Alternatively, if a value of the field corresponding to the TCI-state is 0, it may indicate that the TCI-state is activated and is mapped to the TCI field in the DCI. Correspondingly, if a value of the field corresponding to the TCI-state is 1, it may indicate that the TCI-state is deactivated and is not mapped to the TCI field in the DCI.

S303: The network device sends downlink control information (download control information, DCI) to the terminal device, and correspondingly, the terminal device receives the DCI from the network device. The DCI indicates beam information of the terminal device. The beam information includes one of the one or more TCI-states. Therefore, a spatial parameter indicated by the TCI-state is used for PDSCH transmission.

For example, the network device may indicate one of the one or more TCI-states by using different values of the TCI field based on the content shown in Table 1.

In another example, an indication of the beam information of the PDSCH may be implemented based on steps S304 and S305 shown in FIG. 3b.

S304: Step S304 is the same as step S301. For details, refer to related descriptions of step S301. Details are not described herein again.

S305: The network device sends DCI to the terminal device, and correspondingly, the terminal device receives the DCI from the network device. The DCI indicates beam information of the terminal device. The beam information includes one of a plurality of TCI-states. Therefore, a spatial parameter indicated by the one TCI-state is used for PDSCH transmission.

Optionally, the network device may perform beam measurement (that is, beam sweeping) on spatial parameters respectively corresponding to the plurality of TCI-states, to determine the one TCI-state indicated by the DCI. In other words, before step S402, beam measurement (that is, beam sweeping) may be further performed, to determine the one TCI-state.

In a second possible implementation, the beam indication information is beam information of a PDCCH (for example, the beam indication information may be QCL information indicated by a TCI-state).

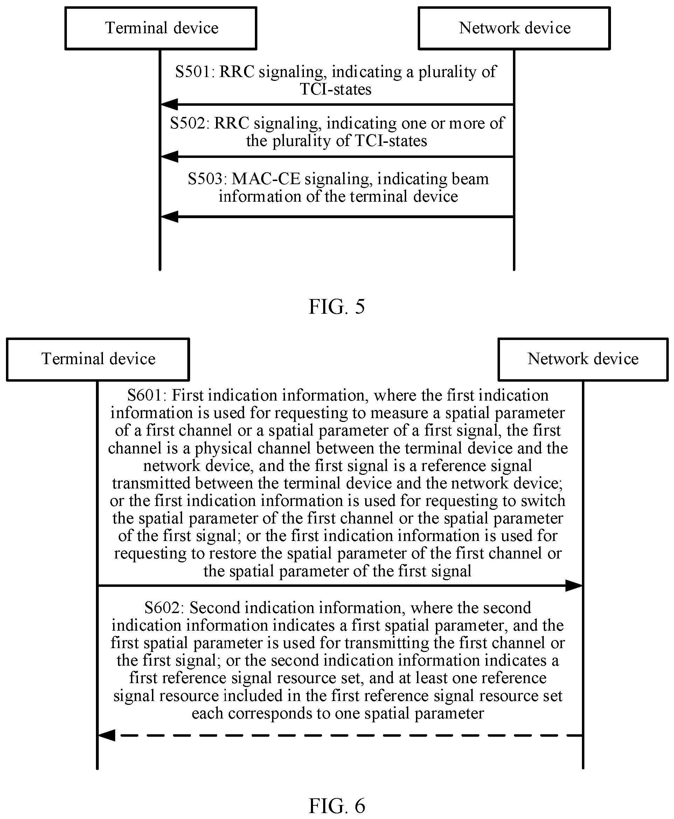

For example, an indication of the beam information of the PDSCH may be implemented based on steps S501 to S503 shown in FIG. 5.

S501: Step S501 is the same as step S301. For details, refer to related descriptions of step S401. Details are not described herein again.

S502: The network device sends RRC signaling to the terminal device, and correspondingly, the terminal device receives the RRC signaling from the network device. The RRC signaling indicates one or more of a plurality of TCI-states.

For example, the network device may perform beam measurement (that is, beam sweeping) on spatial parameters respectively corresponding to the plurality of TCI-states, to determine the one or more TCI-states. In other words, before step S502, beam measurement (that is, beam sweeping) may be further performed, to determine the one or more TCI-states.

S503: The network device sends MAC-CE signaling to the terminal device, and correspondingly, the terminal device receives the MAC-CE signaling from the network device. The MAC-CE signaling indicates beam information of the terminal device. The beam information includes one of the one or more TCI-states. Therefore, a spatial parameter indicated by the one TCI-state is used for PDCCH transmission.

In a third possible implementation, the beam indication information is beam information of a CSI-RS (for example, the beam indication information may be QCL information indicated by a TCI-state).

Optionally, the network device may indicate the beam information of the terminal device by using RRC signaling. The beam information includes one of a plurality of TCI-states. Therefore, a spatial parameter indicated by the one TCI-state is used for CSI-RS transmission.

For example, the plurality of TCI-states may be configured by the network device. For details, refer to related descriptions of step S501. Details are not described herein again.

For example, the network device may perform beam measurement (that is, beam sweeping) on spatial parameters respectively corresponding to the plurality of TCI-states, to determine one of the plurality of TCI-states.

In a fourth possible implementation, the beam indication information is beam information of a PUCCH (for example, the beam indication information may be spatial relation information indicated by a TCI-state).

In an example, the network device may indicate the beam information of the terminal device by using RRC signaling. For a specific implementation, refer to the foregoing descriptions in the third possible implementation. Details are not described herein again.

In another example, the network device may indicate the beam information of the terminal device by using MAC-CE signaling. For a specific implementation, refer to the foregoing related descriptions in FIG. 3b. Details are not described herein again.

In a fifth possible implementation, the beam indication information is beam information of an SRS (for example, the beam indication information may be spatial relation information indicated by a TCI-state).

For example, the SRS includes a periodic SRS, a semi-periodic SRS, and an aperiodic SRS. An implementation of beam information of the periodic SRS is similar to an implementation of the beam information of the CSI-RS. An implementation of beam information of the semi-periodic SRS and the aperiodic SRS is similar to an implementation of the beam information of the PUCCH. For details, refer to related descriptions of the beam information of the CSI-RS and/or the beam information of the PUCCH. Details are not described herein again.

In a sixth possible implementation, the beam indication information is beam information of a PUSCH (for example, the beam indication information may be spatial relation information indicated by a TCI-state).

For example, the network device may indicate the beam information of the terminal device by using DCI. Specifically, the network device may indicate one of one or more TCI-states by using different values of an SRS resource identifier (SRS resource identifier, SRI) field.

### Manner 2: Multi-TRP-based beam indication

In the 3rd generation partnership project (3rd generation partnership project, 3GPP) release 16 (release 16, R16) standards, a multi-transmission reception point (transmission reception point, TRP) transmission mode (using two TRPs as an example) is defined. To be specific, one terminal device is simultaneously served by a plurality of cells, to improve a rate and coverage at a cell edge.

In an example, one piece of DCI indicates TCI-states respectively corresponding to a plurality of TRPs. To be specific, the one piece of DCI indicates two TCI-states. Specifically, an implementation of the TCI-states respectively corresponding to the plurality of TRPs scheduled and indicated by the one piece of DCI is similar to the procedure shown in FIG. 3a. A difference from the procedure shown in FIG. 3a is that in the implementation of the TCI-states respectively corresponding to the plurality of TRPs scheduled and indicated by the one piece of DCI, 8 TCI-states are respectively mapped to TCI fields of the DCI by using MAC-CE signaling, and different code points of the TCI field may correspond to two TCI-states. Therefore, the DCI may indicate two of 8 TCI-states by using the code points of the TCI field.

For example, in the example, because the TCI-states respectively corresponding to the plurality of TRPs are indicated based on one piece of DCI, the piece of DCI corresponds to one acknowledge character (acknowledge character, ACK) / negative acknowledge character (negative acknowledge character, NACK).

In another example, two pieces of DCI respectively indicate different TCI-states in TCI-states corresponding to a plurality of TRPs. In other words, one piece of DCI indicates one of the TCI-states corresponding to the plurality of TRPs.

Specifically, an implementation in which each of the two pieces of DCI indicates the TCI-state is the same as the procedure shown in FIG. 3a. For details, refer to related descriptions in FIG. 3a. Details are not described herein again.

For example, in the example, because the TCI-states respectively corresponding to the plurality of TRPs are indicated based on the two pieces of DCI, each of the two pieces of DCI corresponds to one ACK/NACK.

It can be learned from the foregoing beam indication procedure that all beam indications in current new radio (new radio, NR) are initiated by the network device. In addition, the network device periodically performs beam measurement. In comparison with the terminal device, the network device is not sensitive to a change of a beam at the terminal device side (that is, the network device cannot learn of the change of the beam at the terminal device side in a timely manner). For example, when a mobility change (for example, a moving speed or a moving direction of the terminal device) of the terminal device occurs, or a receive antenna/receive link of the terminal device is blocked, if the network device does not perform beam measurement at this moment, the network device cannot learn of the change of the terminal device. Consequently, the network device cannot indicate a new beam in a timely manner to ensure signal or channel transmission.

Based on this, an embodiment of this application provides a communication method. A terminal device sends first indication information to trigger measurement, switching, or restoration of a spatial parameter of a first channel or a spatial parameter of a first signal (that is, a beam of the first channel/a beam of the first signal). In comparison with the network device, the terminal device can learn of a change of a beam of the terminal device in a timely manner (for example, beam mismatch for the first channel/the first signal due to movement of the terminal device). Therefore, the terminal device may send the first indication information when the beam changes, to indicate the network device to measure, switch, or restore the spatial parameter of the first channel or the spatial parameter of the first signal, so that the network device can indicate a new beam to the terminal device in a timely manner, to ensure signal or channel transmission and maintain normal communication between the network device and the terminal device.

FIG. 6 shows a communication method according to an embodiment of this application. The communication method includes the following steps.

S601: A network device sends first indication information to a terminal device, and correspondingly, the terminal device receives the first indication information from the network device. The first indication information is used for requesting to measure a spatial parameter of a first channel or a spatial parameter of a first signal, the first channel is a physical channel between a terminal device and a network device, and the first signal is a reference signal transmitted between the terminal device and the network device; or the first indication information is used for requesting to switch the spatial parameter of the first channel or the spatial parameter of the first signal; or the first indication information is used for requesting to restore the spatial parameter of the first channel or the spatial parameter of the first signal.

For example, the first channel or the first signal may be understood as a channel or a signal that is being transmitted between the terminal device and the network device. For example, the first channel includes but is not limited to a PUCCH, a PUSCH, a PDCCH, and a PDSCH. The first signal includes but is not limited to an SRS, a PTRS, a DMRS, a TRS, a CSI-RS, and an SSB.

Optionally, the spatial parameter of the first channel or the spatial parameter of the first signal may be understood as a spatial-domain resource (for example, a beam) of the first channel or a spatial-domain resource of the first channel. Alternatively, the spatial parameter of the first channel or the spatial parameter of the first signal may be understood as a spatial-domain resource that can be used for transmitting the first channel or the first signal. The spatial parameter of the first channel or the spatial parameter of the first channel includes one or more spatial parameters. Alternatively, the spatial parameter of the first channel or the spatial parameter of the first signal may be understood as qcl-Info configured for the first channel or the first signal. Alternatively, the spatial parameter of the first channel or the spatial parameter of the first signal may be understood as a specific TCI state in qcl-Info configured for the first channel or the first signal.

Optionally, that the first indication information is used for requesting to measure the spatial parameter of the first channel or the spatial parameter of the first signal may be understood as follows: The first indication information is used for triggering measurement of the spatial parameter of the first channel or the spatial parameter of the first signal. In this case, the first indication information may also be referred to as a spatial parameter measurement request, a beam measurement request, or another name. This is not limited.

Similarly, that the first indication information is used for requesting to switch the spatial parameter of the first channel or the spatial parameter of the first signal may be understood as follows: The first indication information is used for triggering switching of the spatial parameter of the first channel or the spatial parameter of the first signal. In this case, the first indication information may also be referred to as a spatial parameter switching request, a beam switching request, or another name. This is not limited.

Similarly, that the first indication information is used for requesting to restore the spatial parameter of the first channel or the spatial parameter of the first signal may be understood as follows: The first indication information is used for triggering restoration of the spatial parameter of the first channel or the spatial parameter of the first signal. In this case, the first indication information may also be referred to as a spatial parameter failure recovery request, a beam failure recovery request, or another name. This is not limited.

Optionally, after the first indication information from the terminal device is received, the network device may perform the following two operations.

In a possible implementation, the network device does not respond to the first indication information. In other words, the network device does not make a response to the first indication information.

For example, in the possible implementation, the network device may not perform any operation. Alternatively, the network device may continue to perform an original operation of the network device. In other words, the network device is not affected by the first indication information. In this case, it may also be considered that the first indication information fails to trigger measurement of the spatial parameter of the first channel or the spatial parameter of the first signal, or the first indication information fails to trigger switching of the spatial parameter of the first channel or the spatial parameter of the first signal, or the first indication information fails to trigger restoration of the spatial parameter of the first channel or the spatial parameter of the first signal.

In another possible implementation, the network device responds to the first indication information.

Optionally, in the possible implementation, as shown in FIG. 6, the communication method may further include step S602.

S602: The network device sends second indication information to the terminal device, and correspondingly, the terminal device receives the second indication information from the network device. The second indication information indicates a first spatial parameter, and the first spatial parameter is used for transmitting the first channel or the first signal; or the second indication information indicates a first reference signal resource set, and at least one reference signal resource included in the first reference signal resource set each corresponds to one spatial parameter. The at least one reference signal resource set includes at least one first signal.

An embodiment of this application provides a communication method. The terminal device sends the first indication information to trigger measurement, switching, or restoration of the spatial parameter of the first channel or the spatial parameter of the first signal (that is, a beam of the first channel/a beam of the first signal). In comparison with the network device, the terminal device can learn of a change of a beam of the terminal device in a timely manner (for example, beam mismatch for the first channel/the first signal due to movement of the terminal device). Therefore, the terminal device may send the first indication information when the beam changes, to indicate the network device to measure, switch, or restore the spatial parameter of the first channel or the spatial parameter of the first signal, that is, the network device can start beam measurement or beam switching based on the first indication information, so that the network device can indicate a new beam to the terminal device in a timely manner, thereby ensuring normal communication between the network device and the terminal device.

The foregoing provides overall descriptions of the communication method provided in embodiments of this application. The following separately describes steps S601 and S602 in the foregoing embodiments.

For step S601:
Optionally, the first indication information is located in a first field in uplink control information (uplink control information, UCI), where the first field is used for requesting to measure the spatial parameter of the first channel or the spatial parameter of the first signal; or the first field is used for requesting to switch the spatial parameter of the first channel or the spatial parameter of the first signal; or the first field is used for requesting to restore the spatial parameter of the first channel or the spatial parameter of the first signal.

For example, the following describes an implementation of the first field by using an example in which the first field is used for requesting to measure the spatial parameter of the first channel or the spatial parameter of the first signal.

In an example, when the UCI includes the first field, the first field is used for requesting to measure the spatial parameter of the first channel or the spatial parameter of the first signal.

In another example, the first field is a fixed field in the UCI. That is, the first field is newly defined in the UCI.

For example, in this example, the first field is used for requesting to measure the spatial parameter of the first channel or the spatial parameter of the first signal by using a value of the first field.

For example, the first field may be represented by using one bit. When a value of the one bit is 1, the first field is used for requesting to measure the spatial parameter of the first channel or the spatial parameter of the first signal. In this case, a value of the first indication information is 1. Alternatively, when a value of the one bit is 0, the first field is used for requesting to measure the spatial parameter of the first channel or the spatial parameter of the first signal. In this case, a value of the first indication information is 0. The foregoing describes the implementation of the first field by using only one bit as an example. Actually, the first field may be two bits, or the first field may be greater than two bits. This is not limited.

The foregoing describes the implementation of the first field by using only an example in which the first field is used for requesting to measure the spatial parameter of the first channel or the spatial parameter of the first signal. When the first field is used for requesting to switch the spatial parameter of the first channel or the spatial parameter of the first signal, or the first field is used for requesting to restore the spatial parameter of the first channel or the spatial parameter of the first signal, for the implementation of the first field, reference may be made to related descriptions of the implementation in which the first field is used for requesting to measure the spatial parameter of the first channel or the spatial parameter of the first signal. Details are not described herein again.

For example, the terminal device may send the first indication information in the following two implementations.

In a possible implementation, the terminal device sends the first indication information based on a first condition. The first condition includes one or more of the following: a first channel hybrid automatic repeat request (hybrid automatic repeat request, HARQ) feedback of the terminal device is a NACK, and signal quality of the first signal is less than or equal to a first threshold.

Optionally, that the terminal device sends the first indication information includes: The terminal device determines that a first condition is satisfied, and sends the first indication information. In other words, when the first condition is satisfied, the terminal device sends the first indication information to the network device.

For example, that the signal quality of the first signal is less than or equal to the first threshold includes: The signal quality of the first signal is less than the first threshold, or the signal quality of the first signal is equal to the first threshold.

Optionally, that the signal quality of the first signal is less than or equal to the first threshold may also be understood as follows: The signal quality of the first signal falls within a first range, where a maximum value of the first range is equal to the first threshold.

For example, the signal quality of the first signal may be represented by a reference signal received power (reference signal received power, RSRP) of the first signal or a signal to interference plus noise ratio (signal to interference plus noise ratio, SINR) of a reference signal.

For example, the signal quality of the first signal is the RSRP, and a value of the first threshold is -100 dBm.

For example, the signal quality of the first signal is the SINR, and a value of the first threshold is -20 dB.

For example, the NACK and the first indication information may be carried in same UCI. Alternatively, the first indication information may be a NACK. In this case, the NACK is used for requesting to measure the spatial parameter of the first channel or the spatial parameter of the first signal; or the NACK is used for requesting to switch the spatial parameter of the first channel or the spatial parameter of the first signal; or the NACK is used for requesting to restore the spatial parameter of the first channel or the spatial parameter of the first signal.

Optionally, that the terminal device sends the first indication information includes: If the HARQ feedback is the NACK, it is considered that the first indication information is also sent. In other words, when a HARQ feedback of a PDSCH is a NACK, a corresponding beam measurement or switching request is also included.

According to the optional solution, because the first channel HARQ feedback of the terminal device is the NACK, and the signal quality of the first signal is less than or equal to the first threshold, it indicates that the channel quality of the first channel or the signal quality of the first signal is poor, and a new beam (that is, a spatial parameter) needs to be switched to. In this case, the terminal device may send the first indication information to the network device, to trigger measurement, switching, or restoration of the spatial parameter of the first channel or the spatial parameter of the first signal (that is, a beam of the first channel/a beam of the first signal), that is, the network device can start beam measurement or beam switching. In comparison with a solution in which a network device periodically performs beam measurement, in this solution, beam switching can be performed in a timely manner, to ensure normal communication between the network device and the terminal device.

In another possible implementation, the terminal device sends the first indication information based on an uplink scheduling request (scheduling request, SR).

Optionally, that the terminal device sends the first indication information includes: sending the first indication information if there is the SR.

For example, that there is the SR may be understood as follows: The terminal device has a requirement for sending a PUSCH.

According to the optional solution, if there is the SR, the terminal device sends the first indication information to the network device, to trigger measurement or switching of the spatial parameter of the first channel or the spatial parameter of the first signal (that is, a beam of the first channel/a beam of the first signal), so that the network device can configure a preferred spatial parameter (that is, a beam) for the terminal device in a timely manner, and the terminal device can send the PUSCH by using the preferred spatial parameter, to ensure normal communication between the network device and the terminal device.

In still another possible implementation, the terminal device sends the first indication information based on an SR and signal quality of the first signal.

Optionally, that the terminal device sends the first indication information includes: sending the first indication information if there is a first SR and the signal quality of the first signal is less than or equal to the first threshold.

Optionally, that the terminal device sends the first indication information includes: If there is the SR, it is considered that the first indication information is also sent. In other words, when there is an uplink scheduling request, a corresponding beam measurement or switching request is also included.

For example, in the foregoing two possible implementations, the SR and the first indication information may be carried in same UCI. Alternatively, the first indication information may be the SR. In this case, the SR is used for requesting to measure the spatial parameter of the first channel or the spatial parameter of the first signal; or the SR is used for requesting to switch the spatial parameter of the first channel or the spatial parameter of the first signal; or the SR is used for requesting to restore the spatial parameter of the first channel or the spatial parameter of the first signal.

In an example, the first indication information may further indicate a first spatial parameter group, and the first spatial parameter group includes a first spatial parameter. In this case, the first indication information is used for requesting to measure the spatial parameter of the first channel, or the first indication information is used for requesting to switch the spatial parameter of the first channel, or the first indication information is used for requesting to restore the spatial parameter of the first channel.

In other words, when the first indication information is used for requesting to measure the spatial parameter of the first channel, or the first indication information is used for requesting to switch the spatial parameter of the first channel, or the first indication information is used for requesting to restore the spatial parameter of the first channel, the first indication information may further indicate the first spatial parameter group.

For example, the first spatial parameter group may also be referred to as a first group of spatial parameters, and the first spatial parameter group includes one or more spatial parameters.

For example, the first indication information indicates one or more TCI-states. In this case, the first spatial parameter group includes one or more TCI-states. Each TCI-state corresponds to one spatial parameter.

Optionally, when the first indication information is used for requesting to measure the spatial parameter of the first channel or the spatial parameter of the first signal, or the first indication information is used for requesting to switch the spatial parameter of the first channel or the spatial parameter of the first signal, or the first indication information is used for requesting to restore the spatial parameter of the first channel or the spatial parameter of the first signal, a first spatial parameter corresponding to the first channel or a first spatial parameter corresponding to the first signal may be further included in a predefined spatial parameter group, and the predefined spatial parameter group may be the first spatial parameter group. Alternatively, the following may be further included: the first spatial parameter corresponding to the first channel is obtained by measuring at least one spatial parameter included in the first spatial parameter group. Alternatively, the following may be further included: a signal corresponding to the first channel is sent by using the first spatial parameter.

Optionally, when the first indication information is used for requesting to measure the spatial parameter of the first channel or the spatial parameter of the first signal, or the first indication information is used for requesting to switch the spatial parameter of the first channel or the spatial parameter of the first signal, or the first indication information is used for requesting to restore the spatial parameter of the first channel or the spatial parameter of the first signal, a first spatial parameter corresponding to the first channel or a first spatial parameter corresponding to the first signal may be further included in a spatial parameter group reported by the terminal device, and the spatial parameter group herein may be the first spatial parameter group. Alternatively, the following may be further included: The terminal device reports the first spatial parameter group via the first indication information; or the terminal device reports an index of a reference signal resource set via the first indication information, where the reference signal resource includes at least one reference signal, and each of the at least one reference signal corresponds to one spatial parameter. Alternatively, the following may be further included: the first spatial parameter corresponding to the first channel is obtained. Alternatively, the following may be further included: a signal corresponding to the first channel is sent by using the first spatial parameter. In another example, the first indication information indicates a second reference signal resource set, and one or more reference signal resources included in the second reference signal resource set respectively correspond to one or more spatial parameters included in the first spatial parameter group.

In this case, the first indication information is used for requesting to measure the spatial parameter of the first signal, or the first indication information is used for requesting to switch the spatial parameter of the first signal, or the first indication information is used for requesting to restore the spatial parameter of the first signal.

In other words, when the first indication information is used for requesting to measure the spatial parameter of the first signal, or the first indication information is used for requesting to switch the spatial parameter of the first signal, or the first indication information is used for requesting to restore the spatial parameter of the first signal, the first indication information may further indicate the second reference signal resource set.

For example, that the one or more reference signal resources included in the second reference signal resource set respectively correspond to the one or more spatial parameters included in the first spatial parameter group may be understood as follows: The one or more reference signal resources are in one-to-one correspondence with the one or more spatial parameters. Because each reference signal resource corresponds to one TCI-state, and each TCI-state corresponds to one spatial parameter, it may be considered that the reference signal resource indirectly indicates the spatial parameter by indicating the TCI-state. Therefore, it may be considered that the second reference signal resource set indicates the one or more spatial parameters. That is, the second reference resource set indicates the first spatial parameter group.

For example, the second reference signal resource set includes but is not limited to a CSI-RS resource set and an SRS resource set.

Optionally, the first spatial parameter group is determined based on a second spatial parameter. The second spatial parameter is the spatial parameter of the first channel, or the second spatial parameter is the spatial parameter of the first signal, and the signal quality of the first signal is less than or equal to the first threshold.

Alternatively, it may be understood as follows: The second spatial parameter is a spatial parameter for carrying the first channel, or the second spatial parameter is a spatial parameter for carrying the first signal, where the signal quality of the first signal is less than or equal to the first threshold.

For example, because the second reference resource set indicates the first spatial parameter group, that the first spatial parameter is related to the second spatial parameter is equivalent to that the second reference resource set is related to the second spatial parameter. In other words, an implementation of determining the first spatial parameter group based on the second spatial parameter is the same as an implementation of determining the second reference resource set based on the second spatial parameter. For ease of description, descriptions are provided below by using only the implementation of determining the first spatial parameter group based on the second spatial parameter as an example. For the implementation of determining the second reference resource set based on the second spatial parameter, refer to related descriptions of the implementation of determining the first spatial parameter group based on the second spatial parameter. Details are not described herein again.

For example, that the first spatial parameter group is determined based on the second spatial parameter may also be understood as follows: The first spatial parameter group is associated with the second spatial parameter.

For example, a condition for sending the first indication information by the terminal device is that a first condition is satisfied, and the first condition includes that a first channel HARQ feedback of the terminal device is a NACK, and/or signal quality of the first signal is less than or equal to a first threshold. It can be learned from the concept of the second spatial parameter that the step of sending, by the network device, the first channel or the first signal to the terminal device by using the second spatial parameter is performed before the terminal device sends a first uplink indication signal. Therefore, it may also be considered that the second spatial parameter is a spatial parameter used for transmission of the first channel or the first signal between the terminal device and the network device before the terminal device sends the first indication information.

In an implementation, a correlation between any spatial parameter in the first spatial parameter group and the second spatial parameter is greater than or equal to a second threshold.

For example, that the correlation between any spatial parameter in the first spatial parameter group and the second spatial parameter is greater than or equal to the second threshold includes: The correlation between any spatial parameter in the first spatial parameter group and the second spatial parameter is greater than the second threshold, or the correlation between any spatial parameter in the first spatial parameter group and the second spatial parameter is equal to the second threshold.

Optionally, that the correlation between any spatial parameter in the first spatial parameter group and the second spatial parameter is greater than or equal to the second threshold may also be understood as follows: The correlation between any spatial parameter in the first spatial parameter group and the second spatial parameter falls within a second range, where a minimum value of the second range is equal to the second threshold.

According to the optional solution, because a change of a beam (that is, the spatial parameter of the first channel or the spatial parameter of the first signal) is continuous, when the beam changes, for the first channel or the first signal, a beam with a strong correlation to the beam before the change has good performance. Therefore, the terminal device may determine the beam with the strong correlation to the beam before the change as the first spatial parameter group, and report the first spatial parameter group to the network device, so that the network device can determine the first spatial parameter or the first reference signal resource set based on the first spatial parameter group. In comparison with a solution in which a network device determines a first spatial parameter or a first reference signal resource set from all spatial parameters of a first channel or a first signal, in this solution, resource consumption can be reduced, and a delay and complexity of determining the first spatial parameter or the first reference signal resource set can be reduced.

In another implementation, a correlation between any spatial parameter in the first spatial parameter group and the second spatial parameter is less than or equal to a second threshold.

Optionally, that the correlation between any spatial parameter in the first spatial parameter group and the second spatial parameter is less than or equal to the second threshold may also be understood as follows: The correlation between any spatial parameter in the first spatial parameter group and the second spatial parameter falls within a third range, where a maximum value of the third range is equal to the second threshold.

In still another implementation, the correlation between any spatial parameter in the first spatial parameter group and the second spatial parameter satisfies a specific threshold range.

For example, that the correlation between any spatial parameter in the first spatial parameter group and the second spatial parameter is greater than or equal to an X^{th} threshold and less than or equal to a Y^{th} threshold includes: The correlation between any spatial parameter in the first spatial parameter group and the second spatial parameter is greater than the X^{th} threshold, or the correlation between any spatial parameter in the first spatial parameter group and the second spatial parameter is equal to the X^{th} threshold; or the correlation between any spatial parameter in the first spatial parameter group and the second spatial parameter is less than the Y^{th} threshold, or the correlation between any spatial parameter in the first spatial parameter group and the second spatial parameter is equal to the Y^{th} threshold. Y is an integer greater than 0.

For example, the correlation between any spatial parameter in the first spatial parameter group and the second spatial parameter is greater than or equal to the second threshold, and a value of the second threshold is a rational number between 0 and 1.

For example, the value of the second threshold is 0.9 or 0.8.

In yet another implementation, a difference between an index of any spatial parameter in the first spatial parameter group and an index of the second spatial parameter is less than or equal to a third threshold.

For example, that the difference between the index of any spatial parameter in the first spatial parameter group and the index of the second spatial parameter is less than or equal to the third threshold includes: The difference between the index of any spatial parameter in the first spatial parameter group and the index of the second spatial parameter is less than the third threshold, or the difference between the index of any spatial parameter in the first spatial parameter group and the index of the second spatial parameter is equal to the third threshold.

Optionally, that the difference between the index of any spatial parameter in the first spatial parameter group and the index of the second spatial parameter is less than or equal to the third threshold may also be understood as follows: The difference between the index of any spatial parameter in the first spatial parameter group and the index of the second spatial parameter falls within a fourth range, where a maximum value of the fourth range is equal to the third threshold.

For example, the correlation between any spatial parameter in the first spatial parameter group and the second spatial parameter is greater than or equal to the third threshold, and a value of the third threshold is a rational number between 0 and 1.

For example, the value of the third threshold is less than the value of the second threshold.

For example, the value of the third threshold is 0.6 or 0.5.

According to the optional solution, because a change of a beam (that is, the spatial parameter of the first channel or the spatial parameter of the first signal) is continuous, when the beam changes, for the first channel or the first signal, a beam near the beam before the change has good performance (that is, a spatial parameter having an index whose difference from the index of the second spatial parameter is less than or equal to the third threshold). Therefore, the terminal device may determine the beam near the beam before the change as the first spatial parameter group, and report the first spatial parameter group to the network device, so that the network device can determine the first spatial parameter or the first reference signal resource set based on the first spatial parameter group. In comparison with a solution in which a network device determines a first spatial parameter or a first reference signal resource set from all spatial parameters of a first channel or a first signal, in this solution, resource consumption can be reduced, and a delay and complexity of determining the first spatial parameter or the first reference signal resource set can be reduced.

Optionally, the first indication information corresponds to a first index, and the first index is the same as an index of a control resource set pool CORESET pool corresponding to the second spatial parameter.

For example, that the first index is the same as the index of the control resource set pool CORESET pool corresponding to the second spatial parameter may also be understood as follows: The first index indicates the CORESET pool corresponding to the second spatial parameter. Optionally, the first index corresponding to the first indication information is the index of the control resource set pool corresponding to the first indication information.

For example, the CORESET pool corresponding to the second spatial parameter may be understood as a CORESET pool corresponding to DCI scheduled by using a PDCCH (that is, DCI indicating the second spatial parameter, for example, second indication information). In other words, the first index is the same as an index of a control resource set pool CORESET pool corresponding to the second indication information.

According to the optional solution, the CORESET pool is configured by the network device for the terminal device, and different network devices configure different CORESET pools. In other words, the network device that configures the CORESET pool can be determined based on the index of the CORESET pool. Therefore, it may also be considered that the first index indicates the network device that configures the CORESET pool. Therefore, in a multi-TRP transmission mode, after the terminal device sends the first indication information to a plurality of network devices, the plurality of network devices may learn of, by using the first index, the network device responding to the first indication information.

For step S602:
For example, based on a first request message, the second indication information may include the following two possible implementations.

In a possible implementation, when the first indication information is used for requesting to switch the spatial parameter of the first channel or the spatial parameter of the first signal, the second indication information indicates the first spatial parameter, and the first spatial parameter is used for transmitting the first channel or the first signal.

For example, the second indication information may be carried in any one of RRC signaling, MAC-CE signaling, and DCI.

For example, in the possible implementation, the network device may determine the first spatial parameter in the following two manners.

Manner 1: When the first indication information indicates the first spatial parameter group or the second reference signal resource set, the network device may use, as the first spatial parameter, one of one or more spatial parameters indicated by the first spatial parameter group or included in the second reference signal resource set.

Manner 2: When the first indication information does not indicate the first spatial parameter group or the second reference signal resource set, the network device may use, as the first spatial parameter, one of one or more spatial parameters indicated by a predefined spatial parameter group or a predefined reference signal resource set.

Optionally, the predefined spatial parameter group or the predefined reference signal resource set is predefined, or may be predefined by the network device.

For example, based on the foregoing two manners, the network device may determine, as the first spatial parameter, any one of one or more spatial parameters indicated by the spatial parameter group (that is, the first spatial parameter group or the predefined spatial parameter group) or the reference signal resource set (that is, the second reference signal resource set or the predefined reference signal resource set).

Alternatively, the network device may determine, as the first spatial parameter, a spatial parameter with the best performance (for example, a spatial parameter whose index has the smallest difference from an index of a second spatial parameter, or a spatial parameter having the strongest correlation to the second spatial parameter) in one or more spatial parameters indicated by the spatial parameter group or the reference signal resource set.

For example, the first spatial parameter group includes K TCI-state index values.

For example, if a value of a TCI state index corresponding to the spatial parameter of the first channel or the spatial parameter of the first signal is Q, a value of K in the values of K TCI state indexes included in the first spatial parameter group is 8, and the K TCI state indexes included in the first spatial parameter group correspond to 8 TCI state indexes: {K-4, K-3, K-2, K-1, K+1, K+2, K+3, K+4}. It should be noted that the quantity of values of the first spatial parameter group and the index number herein are merely used as a possible example, and a method for determining other values of K and K TCI state indexes is not excluded in the present invention.

Optionally, when the first indication information and the NACK are carried in the same UCI, or the first indication information is a NACK, it indicates that channel quality of a PDSCH for carrying the NACK is poor, and a spatial parameter needs to be updated. Therefore, the terminal device requests, by sending the first indication information, the network device to measure, switch, or restore the spatial parameter of the PDSCH corresponding to the NACK. In this case, the first spatial parameter determined by the network device is an updated spatial parameter of the PDSCH corresponding to the NACK. That is, the first spatial parameter is used for transmission of the PDSCH corresponding to the NACK.

For example, the PDSCH corresponding to the NACK may be understood as a PDSCH that triggers the terminal device to send the NACK, or may be understood as a PDSCH that is used by the terminal device to determine the NACK.

Optionally, when the first indication information and the SR are carried in the same UCI, or the first indication information is the SR, it indicates that the terminal device has a requirement for sending a PUSCH, and the network device needs to allocate, to the terminal device, a spatial parameter used for sending the PUSCH. Therefore, the terminal device requests, by sending the first indication information, the network device to measure or switch a spatial parameter corresponding to the SR (that is, the spatial parameter of the PUSCH). In this case, the first spatial parameter determined by the network device is a spatial parameter used for sending the PUSCH. That is, the first spatial parameter is used for transmission of the PUSCH corresponding to the SR.

Optionally, the first spatial parameter may be further used for transmission of another channel or channel other than the first channel or the first signal.

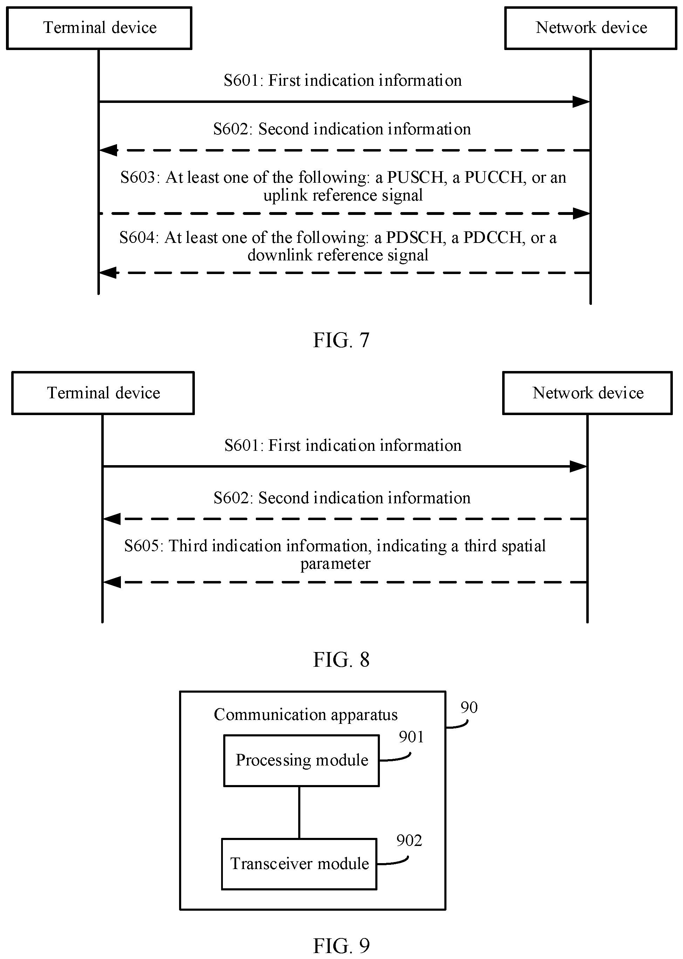

In an example, as shown in FIG. 7, the communication method further includes step S603.

S603: The terminal device sends at least one of the following: a PUSCH, a PUCCH, or an uplink reference signal to the network device, and correspondingly, the network device receives the at least one of the PUSCH, the PUCCH, or the uplink reference signal from the terminal device. The at least one of the PUSCH, the PUCCH, or the uplink reference signal is related to the first spatial parameter.

For example, that the at least one of the PUSCH, the PUCCH, or the uplink reference signal is related to the first spatial parameter includes: The at least one of the PUSCH, the PUCCH, or the uplink reference signal is carried in the first spatial parameter. That is, the terminal device sends the at least one of the PUSCH, the PUCCH, or the uplink reference signal by using the first spatial parameter.

For example, when the first indication information and the NACK are carried in same UCI, or the first indication information is the NACK, in addition to being used for transmission of a PDSCH corresponding to the NACK, the first spatial parameter may be further used for transmission of at least one of the following: a PUSCH, a PUCCH, or an uplink reference signal (for example, an SRS).

Similarly, when the first indication information and the SR are carried in same UCI, or the first indication information is the SR, in addition to being used for transmission of a PUSCH corresponding to the SR, the first spatial parameter may be further used for transmission of at least one of the following: a PUSCH, a PUCCH, or an uplink reference signal (for example, an SRS).

In another example, as shown in FIG. 7, the communication method further includes step S604.

S604: The network device sends at least one of the following: a PDSCH, a PDCCH, or a downlink reference signal to the terminal device, and correspondingly, the terminal device receives the at least one of the PDSCH, the PDCCH, or the downlink reference signal from the network device. The at least one of the PDSCH, the PDCCH, or the downlink reference signal is related to the first spatial parameter.

For example, that the at least one of the PDSCH, the PDCCH, or the downlink reference signal is related to the first spatial parameter includes: The at least one of the PDSCH, the PDCCH, or the downlink reference signal is carried in the first spatial parameter. That is, the network device sends the at least one of the PDSCH, the PDCCH, or the downlink reference signal by using the first spatial parameter.

For example, when the first indication information and the NACK are carried in same UCI, or the first indication information is a NACK, in addition to being used for transmission of a PDSCH corresponding to the NACK, the first spatial parameter may be further used for transmission of at least one of the following: a PDSCH, a PDCCH, or a downlink reference signal (for example, a CSI-RS).

Similarly, when the first indication information and the SR are carried in same UCI, or the first indication information is an SR, in addition to being used for transmission of a PUSCH corresponding to the SR, the first spatial parameter may be further used for transmission of at least one of the following: a PDSCH, a PDCCH, or a downlink reference signal (for example, a CSI-RS).

In another possible implementation, when the first request message is used for requesting to measure the spatial parameter of the first channel or the spatial parameter of the first signal, or when the first indication information is used for requesting to restore the spatial parameter of the first channel or the spatial parameter of the first signal, the second indication information indicates a first reference signal resource set, and at least one reference signal resource included in the first reference signal resource set each corresponds to one spatial parameter.

For example, that the at least one reference signal resource each corresponds to one spatial parameter may be understood as follows: Each of the at least one reference signal resource separately indicates one spatial parameter.

For example, the second indication information may be carried in RRC signaling or MAC-CE signaling.

Optionally, in the possible implementation, after step S602, as shown in FIG. 8, the communication method may further include step S605.

S605: The network device sends third indication information to the terminal device, and correspondingly, the terminal device receives the third indication information from the network device. The third indication information indicates a third spatial parameter. The first reference signal resource set includes the third spatial parameter.

For example, an implementation of determining the third spatial parameter from the first reference signal resource set is similar to the implementation of determining the first spatial parameter from the second reference signal resource set or the first spatial parameter group. For details, refer to the implementation of determining the first spatial parameter from the second reference signal resource set or the first spatial parameter group. Details are not described herein again.

For example, the third indication information may be carried in any one of the RRC signaling, the MAC-CE signaling, or DCI.

Optionally, the network device determines the first reference signal resource set through spatial parameter measurement (that is, beam measurement).

In a possible implementation, the network device may measure all spatial parameters of the first channel or the first signal, and determine the first reference signal resource set by using one or more spatial parameters with good performance.

Optionally, in the possible implementation, the first indication information indicates the first spatial parameter group or the second reference signal resource set (for ease of description, the first spatial parameter group or the second reference signal resource set is referred to as an uplink parameter group for short below), or the first indication information does not indicate the uplink parameter group. In other words, regardless of whether the first indication information indicates the uplink parameter group, the network device measures all spatial parameters of the first channel or the first signal.

For example, a relationship between the first reference signal resource set and the uplink parameter group may include: The spatial parameter indicated by the first reference signal resource set includes a spatial parameter indicated by the uplink parameter group; or a spatial parameter indicated by the uplink parameter group includes the spatial parameter indicated by the first reference signal resource set; or the spatial parameter indicated by the first reference signal resource set is the same as a spatial parameter indicated by the uplink parameter group; or spatial parameters indicated by a part of reference signal resources in the first reference signal resource set are the same as spatial parameters indicated by a part of parameters in the uplink parameter group.

In another possible implementation, the network device may measure one or more spatial parameters indicated by the uplink parameter group, and determine the first reference signal resource set by using one or more spatial parameters with good performance.

For example, the possible implementation is implemented based on the first indication information indicating the uplink parameter group. To be specific, when the first indication information indicates the uplink parameter group, the network device may measure one or more spatial parameters indicated by the uplink parameter group, and select one or more spatial parameters with good performance, to determine the first reference signal resource set.

For example, a relationship between the first reference signal resource set and the uplink parameter group may include: A spatial parameter indicated by the uplink parameter group includes the spatial parameter indicated by the first reference signal resource set; or the spatial parameter indicated by the first reference signal resource set is the same as a spatial parameter indicated by a part of parameters in the uplink parameter group.

According to the possible implementation, the network device may measure the first spatial parameter group or the second reference signal resource set indicated by the first indication information, to determine the first reference signal resource set. In comparison with a solution in which a network device determines a first reference signal resource set from all spatial parameters of a first channel or a first signal, in this implementation, resource consumption can be reduced, and a delay and complexity of determining the first reference signal resource set can be reduced.

In still another possible implementation, the network device may perform measurement on a predefined spatial parameter group or a predefined reference signal resource set (for ease of description, the predefined spatial parameter group or the predefined reference signal resource set is referred to as a predefined parameter group for short below), and select one or more spatial parameters with good performance, to determine the first reference signal resource set.

For example, the possible implementation is implemented based on a protocol or a predefined parameter group predefined by the network device. To be specific, when the protocol or the network device predefines the predefined parameter group, the network device may measure one or more spatial parameters indicated by the predefined parameter group, and select one or more spatial parameters with good performance, to determine the first reference signal resource set.

For example, the relationship between the first reference signal resource set and the predefined parameter group may include: A spatial parameter indicated by the predefined parameter group includes the spatial parameter indicated by the first reference signal resource set; or the spatial parameter indicated by the first reference signal resource set is the same as a spatial parameter indicated by some parameters in the predefined parameter group.

According to the possible implementation, the network device may measure the predefined spatial parameter group or the predefined reference signal resource set, to determine the first reference signal resource set. In comparison with a solution in which a network device determines a first reference signal resource set from all spatial parameters of a first channel or a first signal, in this implementation, resource consumption can be reduced, and a delay and complexity of determining the first reference signal resource set can be reduced.

Optionally, when the first indication information is used for requesting to restore the spatial parameter of the first channel or the spatial parameter of the first signal, before the first reference signal resource set is determined, a default spatial parameter may be configured for the terminal device, and after the third spatial parameter is determined, the default spatial parameter is switched to the third spatial parameter.

According to the optional solution, when the first indication information is used for requesting to restore the first channel or the spatial parameter of the first signal, it indicates that transmission of the first signal or the first channel between the terminal device and the network device has been affected, and a beam measurement process still needs a long time. Therefore, the network device may configure the default spatial parameter for the terminal device, so that the terminal device and the network device transmit the first channel or the first signal by using the default spatial parameter, to reduce a loss of transmission of the first channel or the first signal.

It may be understood that, in the foregoing embodiments, the method and/or the step implemented by the terminal device or the network device may alternatively be a component (for example, a processor, a chip, a chip system, a circuit, a logic module, or software like a chip or a circuit) that may be used in any one of the terminal device or the network device.

The foregoing mainly describes the solutions provided in this application. Correspondingly, this application further provides a communication apparatus, and the communication apparatus is configured to implement the foregoing methods.

The communication apparatus may be the terminal device or the network device in the foregoing method embodiment, or an apparatus including the terminal device or the network device, or a component that may be used in either of the terminal device and the network device, for example, a chip or a chip system.

It may be understood that, to implement the foregoing functions, the communication apparatus includes a corresponding hardware structure and/or software module for performing the functions. A person skilled in the art should easily be aware that units and algorithm steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. In actual implementation, another division manner may be used.

FIG. 9 is a diagram of a structure of a communication apparatus 90. The communication apparatus 90 includes a processing module 901 and a transceiver module 902. The communication apparatus 90 may be configured to implement a function of the foregoing terminal device.

In some embodiments, the communication apparatus 90 may further include a storage module (not shown in FIG. 9), configured to store program instructions and data.

In some embodiments, the transceiver module 902 may also be referred to as a transceiver unit, configured to implement a sending function and/or a receiving function. The transceiver module 902 may include a transceiver circuit, a transceiver machine, a transceiver, or a communication interface.

In some embodiments, the transceiver module 902 may include a receiving module and a sending module that are respectively configured to perform the receiving and sending steps performed by the terminal device in the foregoing method embodiments, and/or configured to support another process of the technology described in this specification. The processing module 901 may be configured to perform the processing (for example, determining, generation, or the like) steps performed by the terminal device in the foregoing method embodiments, and/or configured to support another process of the technology described in this specification.

When the communication apparatus 90 is configured to implement the function of the terminal device:
in some embodiments, the transceiver module 902 is configured to send first indication information, where the first indication information is used for requesting to measure a spatial parameter of a first channel or a spatial parameter of a first signal, the first channel is a physical channel between a terminal device and a network device, and the first signal is a reference signal transmitted between the terminal device and the network device; or the first indication information is used for requesting to switch the spatial parameter of the first channel or the spatial parameter of the first signal; or the first indication information is used for requesting to restore the spatial parameter of the first channel or the spatial parameter of the first signal; and the transceiver module 902 is further configured to receive second indication information, where the second indication information indicates a first spatial parameter, and the first spatial parameter is used for transmitting the first channel or the first signal; or the second indication information indicates a first reference signal resource set, and at least one reference signal resource included in the first reference signal resource set each corresponds to one spatial parameter.

Optionally, the processing module 901 is configured to: determine that a first condition is satisfied, where the first condition includes one or more of the following: a first channel hybrid automatic repeat request HARQ feedback of the terminal device is a NACK, and signal quality of the first signal is less than or equal to a first threshold; and the transceiver module 902 is further configured to send the first indication information.

Optionally, the transceiver module 902 is further configured to send at least one of a physical uplink shared channel PUSCH, a physical uplink control channel PUCCH, or an uplink reference signal, where the at least one of the PUSCH, the PUCCH, or the uplink reference signal is related to the first spatial parameter.

Optionally, the transceiver module 902 is further configured to receive at least one of a physical downlink shared channel PDSCH, a physical downlink control channel PDCCH, or a downlink reference signal, where the at least one of the PDSCH, the PDCCH, or the downlink reference signal is related to the first spatial parameter.

When the communication apparatus 90 is configured to implement the function of the network device:
in some embodiments, the transceiver module 902 is configured to receive first indication information, where the first indication information is used for requesting to measure a spatial parameter of a first channel or a spatial parameter of a first signal, the first channel is a physical channel between a terminal device and a network device, and the first signal is a reference signal transmitted between the terminal device and the network device; or the first indication information is used for requesting to switch the spatial parameter of the first channel or the spatial parameter of the first signal; or the first indication information is used for requesting to restore the spatial parameter of the first channel or the spatial parameter of the first signal; and the transceiver module 902 is further configured to send second indication information based on the first indication information, where the second indication information indicates a first reference signal resource set, and at least one reference signal resource included in the first reference signal resource set each corresponds to one spatial parameter.

Optionally, the transceiver module 902 is further configured to receive at least one of a physical uplink shared channel PUSCH, a physical uplink control channel PUCCH, or an uplink reference signal, where the at least one of the PUSCH, the PUCCH, or the uplink reference signal is related to the first spatial parameter.

Optionally, the transceiver module 902 is further configured to send at least one of a physical downlink shared channel PDSCH, a physical downlink control channel PDCCH, or a downlink reference signal, where the at least one of the PDSCH, the PDCCH, or the downlink reference signal is related to the first spatial parameter.

All related content of the steps in the foregoing method embodiments may be cited in function descriptions of the corresponding functional modules. Details are not described herein again.

In this application, the communication apparatus 90 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 90 in FIG. 9 is a chip or a chip system, a function/implementation process of the transceiver module 902 may be implemented by an input/output interface (or a communication interface) of the chip or the chip system, and a function/implementation process of the processing module 901 may be implemented by a processor (or a processing circuit) of the chip or the chip system.

The communication apparatus 90 provided in this embodiment may perform the foregoing methods. Therefore, for technical effects that can be achieved by the communication apparatus, refer to the foregoing method embodiments. Details are not described herein again.

In a possible product form, the terminal device or the network device described in embodiments of this application may be alternatively implemented by using one or more field programmable gate arrays (field programmable gate arrays, FPGAs), a programmable logic device (programmable logic device, PLD), a controller, a state machine, a logic gate, a discrete hardware component, any other proper circuit, or any combination of circuits that may perform various functions described in this application.

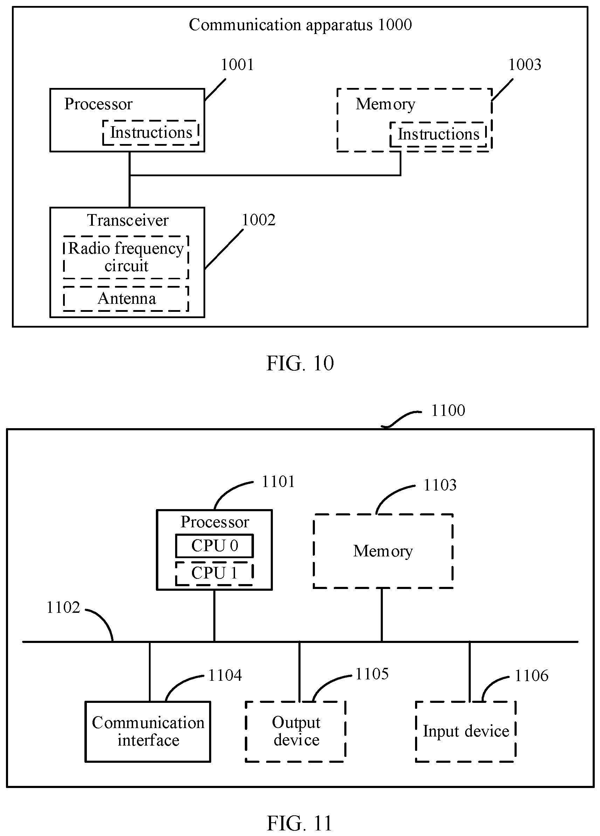

In another possible product form, the terminal device or the network device in embodiments of this application may be implemented by using a general bus architecture. For ease of description, refer to FIG. 10. FIG. 10 is a diagram of a structure of a communication apparatus 1000 according to an embodiment of this application. The communication apparatus 1000 includes a processor 1001 and a transceiver 1002. The communication apparatus 1000 may be a terminal device or a network device, or a chip or a chip system in the terminal device or the network device. FIG. 10 shows only main components in the communication apparatus 1000. In addition to the processor 1001 and the transceiver 1002, the communication apparatus may further include a memory 1003 and an input/output apparatus (not shown in the figure).

Optionally, the processor 1001 is mainly configured to: process a communication protocol and communication data, control the entire communication apparatus, execute a software program, and process data of the software program. The memory 1003 is mainly configured to store the software program and data. The transceiver 1002 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1001, the transceiver 1002, and the memory 1003 may be connected through a communication bus.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 90 may be in a form of the communication apparatus 1000 shown in FIG. 10.

In an example, a function/implementation process of the processing module 901 in FIG. 9 may be implemented by the processor 1001 in the communication apparatus 1000 shown in FIG. 10 by invoking computer-executable instructions stored in the memory 1003. A function/implementation process of the transceiver module 902 in FIG. 9 may be implemented by the transceiver 1002 in the communication apparatus 1000 shown in FIG. 10.

In another possible product form, the terminal device or the network device in this application may use a composition structure shown in FIG. 9, or include components shown in FIG. 11. FIG. 11 is a diagram of a communication apparatus 1100 according to this application. The communication apparatus 1100 may be a terminal device or a network device, or a chip or a system on chip in the terminal device or the network device.

As shown in FIG. 11, the communication apparatus 1100 includes at least one processor 1101 and at least one communication interface (where in FIG. 11, only an example in which one communication interface 1104 and one processor 1101 are included is used for description). Optionally, the communication apparatus 1100 may further include a communication bus 1102 and a memory 1103.

The processor 1101 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another apparatus that has a processing function, for example, a circuit, a device, or a software module. This is not limited.

The communication bus 1102 is configured to connect different components in the communication apparatus 1100, so that the components can communicate with each other. The communication bus 1102 may be a peripheral component interconnect (peripheral component interconnect, PCI) bus or an extended industry standard architecture (extended industry standard architecture, EISA) bus, or the like. The bus may be classified into an address bus, a data bus, a control bus, or the like. For ease of representation, only one bold line is used for representing the bus in FIG. 11, but this does not mean that there is only one bus or only one type of bus.

The communication interface 1104 is configured to communicate with another device or a communication network. For example, the communication interface 1104 may be a module, a circuit, a transceiver, or any apparatus that can implement communication. Optionally, the communication interface 1104 may alternatively be an input/output interface located in the processor 1101, and is configured to implement a signal input and a signal output of the processor.

The memory 1103 may be an apparatus that has a storage function, and is configured to store instructions and/or data. The instructions may be computer programs.

For example, the memory 1103 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that, the memory 1103 may be independent of the processor 1101, or may be integrated with the processor 1101. The memory 1103 may be located inside the communication apparatus 1100, or may be located outside the communication apparatus 1100. This is not limited. The processor 1101 may be configured to execute the instructions stored in the memory 1103, to implement the method provided in the following embodiments of this application.

In an optional implementation, the communication apparatus 1100 may further include an output device 1105 and an input device 1106. The output device 1105 communicates with the processor 1101, and may display information in a plurality of manners. For example, the output device 1105 may be a liquid crystal display (liquid crystal display, LCD), a light-emitting diode (light-emitting diode, LED) display device, a cathode ray tube (cathode ray tube, CRT) display device, a projector (projector), or the like. The input device 1106 communicates with the processor 1101, and may receive a user input in a plurality of manners. For example, the input device 1106 may be a mouse, a keyboard, a touchscreen device, a sensing device, or the like.

In some embodiments, in hardware implementation, a person skilled in the art may figure out that the communication apparatus 90 may be in a form of the communication apparatus 1100 shown in FIG. 11.

In an example, a function/implementation process of the processing module 901 in FIG. 9 may be implemented by the processor 1101 in the communication apparatus 1100 shown in FIG. 11 by invoking computer-executable instructions stored in the memory 1103. A function/implementation process of the transceiver module 902 in FIG. 9 may be implemented by the communication interface 1104 in the communication apparatus 1100 shown in FIG. 11.

It should be noted that, the structure shown in FIG. 11 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

In some embodiments, an embodiment of this application further provides a communication apparatus. The communication apparatus includes a processor, configured to implement the method according to any one of the foregoing method embodiments.

In a possible implementation, the communication apparatus further includes a memory. The memory is configured to store a necessary computer program and data. The computer program may include instructions. The processor may invoke the instructions in the computer program stored in the memory, to indicate the communication apparatus to perform the method according to any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface. The communication interface is configured to communicate with a module other than the communication apparatus.

It may be understood that, the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that, the system, apparatus, and method described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, this is, may be located in one position, or may be distributed on a plurality of network units. Parts displayed as units may or may not be physical units. Some or all of the units may be selected depending on actual requirements to achieve the objectives of the solutions in embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used for implementing embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
sending first indication information, wherein
the first indication information is used for requesting to measure a spatial parameter of a first channel or a spatial parameter of a first signal, the first channel is a physical channel between a terminal device and a network device, and the first signal is a reference signal transmitted between the terminal device and the network device; or
the first indication information is used for requesting to switch the spatial parameter of the first channel or the spatial parameter of the first signal; or
the first indication information is used for requesting to restore the spatial parameter of the first channel or the spatial parameter of the first signal; and
receiving second indication information, wherein the second indication information indicates a first spatial parameter, and the first spatial parameter is used for transmitting the first channel or the first signal; or the second indication information indicates a first reference signal resource set, and at least one reference signal resource comprised in the first reference signal resource set each corresponds to one spatial parameter.

2. The method according to claim 1, wherein sending the first indication information comprises:
determining that a first condition is satisfied, wherein the first condition comprises one or more of the following:
a first channel hybrid automatic repeat request HARQ feedback of the terminal device is a negative NACK, and signal quality of the first signal is less than or equal to a first threshold; and
sending the first indication information.

3. The method according to claim 2, wherein the first spatial parameter is used for transmission of a physical downlink shared channel PDSCH corresponding to the NACK.

4. The method according to claim 1, wherein sending the first indication information comprises:
if there is an uplink scheduling request SR, sending the first indication information.

5. The method according to claim 4, wherein the first spatial parameter is used for transmission of a physical uplink shared channel PUSCH corresponding to the SR.

6. The method according to any one of claims 1 to 5, wherein the method further comprises:
sending at least one of the following: a PUSCH, a physical uplink control channel PUCCH, or an uplink reference signal, wherein the at least one of the PUSCH, the PUCCH, or the uplink reference signal is related to the first spatial parameter.

7. The method according to any one of claims 1 to 6, wherein the method further comprises:
receiving at least one of the following: a PDSCH, a PDCCH, or a downlink reference signal, wherein the at least one of the PDSCH, the PDCCH, or the downlink reference signal is related to the first spatial parameter.

8. The method according to any one of claims 1 to 7, wherein the first indication information is located in a first field in uplink control information UCI, wherein
the first field indicates to measure the spatial parameter of the first channel or the spatial parameter of the first signal; or
the first field indicates to switch the spatial parameter of the first channel or the spatial parameter of the first signal; or
the first field indicates to restore the spatial parameter of the first channel or the spatial parameter of the first signal.

9. The method according to any one of claims 1 to 8, wherein the first indication information further indicates a first spatial parameter group, and the first spatial parameter group comprises the first spatial parameter.

10. The method according to claim 9, wherein the first indication information indicates a second reference signal resource set, and one or more reference signal resources comprised in the second reference signal resource set respectively correspond to one or more spatial parameters in the first spatial parameter group.

11. The method according to claim 9 or 10, wherein the first spatial parameter group is related to a second spatial parameter, and the second spatial parameter is the spatial parameter of the first channel, or the second spatial parameter is the spatial parameter of the first signal, and the signal quality of the first signal is less than or equal to the first threshold.

12. The method according to claim 11, wherein a correlation between any spatial parameter in the first spatial parameter group and the second spatial parameter is greater than or equal to a second threshold.

13. The method according to claim 11 or 12, wherein a difference between an index of any spatial parameter in the first spatial parameter group and an index of the second spatial parameter is less than or equal to a third threshold.

14. The method according to any one of claims 1 to 13, wherein the first indication information corresponds to a first index, and the first index is the same as an index of a control resource set pool CORESET pool corresponding to the second indication information.

15. A communication method, wherein the method comprises:
receiving first indication information, wherein
the first indication information is used for requesting to measure a spatial parameter of a first channel or a spatial parameter of a first signal, the first channel is a physical channel between a terminal device and a network device, and the first signal is a reference signal transmitted between the terminal device and the network device; or
the first indication information is used for requesting to switch the spatial parameter of the first channel or the spatial parameter of the first signal; or
the first indication information is used for requesting to restore the spatial parameter of the first channel or the spatial parameter of the first signal; and
sending second indication information based on the first indication information, wherein the second indication information indicates a first reference signal resource set, and at least one reference signal resource comprised in the first reference signal resource set each corresponds to one spatial parameter.

16. The method according to claim 15, wherein the first spatial parameter is used for transmission of a physical downlink shared channel PDSCH corresponding to a negative NACK.

17. The method according to claim 15, wherein the first spatial parameter is used for transmission of a physical uplink shared channel PUSCH corresponding to a scheduling request SR.

18. The method according to any one of claims 15 to 17, wherein the method further comprises:
receiving at least one of the following: a PUSCH, a physical uplink control channel PUCCH, or an uplink reference signal, wherein the at least one of the PUSCH, the PUCCH, or the uplink reference signal is related to the first spatial parameter.

19. The method according to any one of claims 15 to 18, wherein the method further comprises:
sending at least one of the following: a PDSCH, a PDCCH, or a downlink reference signal, wherein the at least one of the PDSCH, the PDCCH, or the downlink reference signal is related to the first spatial parameter.

20. The method according to any one of claims 15 to 19, wherein the first indication information is located in a first field in first uplink control information UCI, wherein
the first field is used for requesting to measure the spatial parameter of the first channel or the spatial parameter of the first signal; or
the first field is used for requesting to switch the spatial parameter of the first channel or the spatial parameter of the first signal; or
the first field is used for requesting to restore the spatial parameter of the first channel or the spatial parameter of the first signal.

21. The method according to any one of claims 15 to 20, wherein the first indication information further indicates a first spatial parameter group, and the first spatial parameter group comprises the first spatial parameter.

22. The method according to claim 21, wherein the first indication information indicates a second reference signal resource set, and at least one reference signal resource comprised in the second reference signal resource set each corresponds to.

23. The method according to claim 21 or 22, wherein the first spatial parameter group is related to a second spatial parameter, and the second spatial parameter is the spatial parameter of the first channel, or the second spatial parameter is the spatial parameter of the first signal, and signal quality of the first signal is less than or equal to a spatial parameter of a first threshold.

24. The method according to claim 23, wherein a correlation between any spatial parameter in the first spatial parameter group and the second spatial parameter is greater than or equal to a second threshold.

25. The method according to claim 23 or 24, wherein a difference between an index of any spatial parameter in the first spatial parameter group and an index of the second spatial parameter is less than or equal to a third threshold.

26. The method according to any one of claims 15 to 25, wherein the first indication information corresponds to a first index, and the first index is the same as an index of a control resource set pool CORESET pool corresponding to the second indication information.

27. A communication apparatus, wherein the communication apparatus comprises a transceiver module and a processing module, wherein
the transceiver module is configured to: perform receiving behavior or sending behavior in the method according to any one of claims 1 to 14, or perform receiving behavior or sending behavior in the method according to any one of claims 15 to 26; and
the processing module is configured to: perform processing behavior in the method according to any one of claims 1 to 14, or perform processing behavior in the method according to any one of claims 15 to 26.

28. A communication apparatus, wherein the communication apparatus comprises a processor, and the processor is configured to run a computer program or instructions, to cause the communication apparatus to perform the method according to any one of claims 1 to 14, or cause the communication apparatus to perform the method according to any one of claims 15 to 26.

29. A computer-readable storage medium, wherein the computer-readable storage medium stores computer instructions or a program, and when the computer instructions or the program is run on a computer, the method according to any one of claims 1 to 14 is caused to be performed, or the method according to any one of claims 15 to 26 is caused to be performed.

30. A computer program product, wherein when the computer program product runs on a communication apparatus, the communication apparatus is caused to perform the method according to any one of claims 1 to 14, or the communication apparatus is caused to perform the method according to any one of claims 15 to 26.

31. A chip, comprising a processor, wherein the processor is coupled to a memory, the memory is configured to store a program or instructions, and when the program or the instructions are executed by the processor, the chip is caused to perform the method according to any one of claims 1 to 14, or the chip is caused to perform the method according to any one of claims 15 to 26.
